(19) Europäisches Patentamt / European Patent Office / Office européen des brevets

(11) **EP 4 015 918 B1**

(12) **EUROPÄISCHE PATENTSCHRIFT**

(45) Veröffentlichungstag und Bekanntmachung des Hinweises auf die Patenterteilung:
**20.11.2024   Patentblatt 2024/47**

(21) Anmeldenummer: **21211904.4**

(22) Anmeldetag: **02.12.2021**

(51) Internationale Patentklassifikation (IPC):
*F24D 11/00* (2022.01)   *F24D 3/10* (2006.01)
*F24D 19/10* (2006.01)   *F24H 15/238* (2022.01)
*F24H 15/34* (2022.01)   *F24H 15/212* (2022.01)

(52) Gemeinsame Patentklassifikation (CPC):
**F24D 19/1012; F24D 3/1091; F24H 15/212;**
**F24H 15/238; F24H 15/34;** F24D 11/002;
Y02B 30/70

(54) **VERFAHREN ZUR ANSTEUERUNG EINES PRIMÄRKREISES EINER HEIZUNGSANLAGE UND HEIZUNGSANLAGE**

METHOD FOR CONTROLLING A PRIMARY CIRCUIT OF A HEATING INSTALLATION AND HEATING INSTALLATION

PROCÉDÉ ET DISPOSITIF DE COMMANDE D'UN CIRCUIT PRIMAIRE D'UNE INSTALLATION DE CHAUFFAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.12.2020   DE 102020134503**

(43) Veröffentlichungstag der Anmeldung:
**22.06.2022   Patentblatt 2022/25**

(73) Patentinhaber: **Techem Energy Services GmbH**
**65760 Eschborn (DE)**

(72) Erfinder:
• **Ghebru, Dr. Daniel**
**60528 Frankfurt am Main (DE)**

• **Kähler, Dr. Arne**
**61350 Bad Homburg (DE)**
• **Ohl, Dr. Jochen**
**64823 Groß-Umstadt (DE)**
• **Schuck, Alfons**
**60320 Frankfurt (DE)**
• **Schulz, Hans-Jürgen**
**61381 Friedrichsdorf (DE)**

(74) Vertreter: **Keil & Schaafhausen Patentanwälte PartGmbB**
**Bockenheimer Landstraße 25**
**60325 Frankfurt am Main (DE)**

(56) Entgegenhaltungen:
DE-A1- 102015 014 378   DE-U1- 20 109 236
FR-A1- 2 634 873

**Beschreibung**

Die Erfindung betrifft ein Verfahren und eine Heizungsanlage mit einer Vorrichtung zur Ansteuerung eines Primärkreises der Heizungsanlage gemäß des Oberbegriff der Ansprüche 1 und 9. Die Heizungsanlage hat einen Primärkreis und einen Sekundärkreis für ein Wärmeträgermedium, wobei Primärkreis und Sekundärkreis über ein mit Wärmeträgermedium gefülltes Wärmeträgerreservoir, bspw. eine hydraulische Weiche, miteinander verbunden sind. Jeweils ein Vorlaufanschluss und ein Rücklaufanschluss des Primärkreises und ein Vorlaufanschluss und ein Rücklaufanschluss des Sekundärkreises münden in das Wärmeträgerreservoir, wobei in dem Primärkreis mindestens ein Wärmeerzeuger zur Erwärmung des Wärmeträgermediums auf eine primärseitige Vorlauftemperatur $T_{VL,p}$ sowie eine Primärkreispumpe zum Erzeugen eines primärseitigen Massestroms $\dot{m}_P$ des Wärmeträgermediums und in dem Sekundärkreis mindestens ein Wärmeverbraucher angeordnet sind.

Unter einem Wärmeträgerreservoir wird ein Behältnis verstanden, das in dem Behältnis einen Strom (im Sinne von Masse- oder Volumenstrom) des Wärmeträgermediums zwischen Vor- und Rücklaufanschluss von Primärkreis und Sekundärkreis ermöglicht. Das Wärmeträgermedium ist erfindungsgemäß insbesondere ein Fluid, bspw. Wasser. Im einfachsten Fall ist das Wärmeträgerreservoir ein gemeinsamer Raum, in den alle Vor- und Rücklaufanschlüsse von Primär und Sekundärkreis münden. Ein typisches Wärmeträgerreservoir im Sinne der Erfindung kann eine hydraulische Weiche sein, in der in einem gemeinsamen Raum der Vorlaufanschluss des Primärkreises dem Vorlaufanschluss des Sekundärkreises (Vorlauf der Heizungsanlage) und der Rücklaufanschluss des Primärkreises dem Rücklaufanschluss des Sekundärkreises (Rücklauf der Heizungsanlage) zugeordnet sind. Bspw. sind diese in vergleichbarer Höhe angeordnet, wobei der Vorlauf der Heizungsanlage in der hydraulischen Weiche oben und der Rücklauf unten angeordnet ist. Die Erfindung ist jedoch nicht auf eine solche hydraulische Weiche beschränkt. Bspw. können auch jeweils eigenen Behälter für den Vorlauf und den Rücklauf der Heizungsanlage vorgesehen sein, oder auch noch mehr Behälter, soweit diese über eine Strömungsverbindung miteinander verbunden sind und eine Strömung zwischen Vorlaufanschluss und Rücklaufanschluss des Primärkreises und/oder des Sekundärkreises ermöglichen. Auch dies wird als ein Behältnis respektive Wärmeträgerreservoir im Sinne der Erfindung verstanden.

Wärmeerzeuger im Primärkreis kann, etwa in einer klassischen Heizungsanlage, ein Heizkessel sein, in dem durch Verbrennen von Primärenergieträgern, wie Öl oder Gas, Wärme erzeugt und das Wärmeträgermedium erhitzt werden. Alternativ können elektrische Heizelemente, Solarenergieanlagen, Fernwärmetauscher oder dgl. als Wärmeerzeuger im Primärkreis eingesetzt werden.

Der Sekundärkreis kann als ein Heizkreis oder als mehrere Heizkreise ausgebildet sein, in dem/denen Wärmetauscher angeordnet sind. Die Wärmetauscher können Raumheizkörper, Fußbodenheizungen, Warmwasserbereitung oder dgl. Wärmeverbraucher sein. Im Falle von mehreren Heizkreisen als Sekundärkreis können Ein- und Ausgänge mehrerer oder aller der Heizkreise gemeinsam oder separat in das Wärmeträgerreservoir münden. Entsprechendes kann auch für den Primärkreis gelten, wenn unterschiedliche Wärmeerzeuger parallel verwendet werden.

Derartige Heizungsanlagen sind bekannt und werden über eine Heizungsanlagensteuerung, meist eine Wärmeerzeugersteuerung (bspw. eine Kesselsteuerung) angesteuert. Die Primärkreispumpe wird häufig als Kesselkreispumpe bezeichnet. Die Begriffe "Kesselsteuerung", "Kesselkreispumpe" und "hydraulische Weiche" werden als Beispiele für die allgemeineren Begriffe "Wärmeerzeugersteuerung", "Primärkreispumpe" und "Wärmeträgerreservoir" verstanden und sollen diese mit umfassen. Gleiches gilt für den Begriff "Warmwasser" oder "Wasser", der den allgemeineren Begriff "Wärmeträger" mit umfassen soll.

Die Erfindung liegt also insbesondere auf dem Gebiet zentraler Warmwasserheizungsanlage in Gebäuden, wobei die Heizungsanlage mit einer hydraulischen Weiche (respektive einem Wärmereservoir) ausgestattet ist. Bei den Gebäuden kann es sich um Wohn- oder Geschäftsgebäude mit mehreren Parteien handeln, bspw. Mehrfamilienhäuser mit oder ohne Flächen für Gewerbe. Die zur Wärmeversorgung bereitgestellte Wärme kann lokal durch die Umwandlung von Endenergie (z. B. Öl, Gas, Pellets) in einem Heizkessel, insbesondere einem Brennwertkessel, in die Heizungsanlage eingespeist werden. Die hydraulische Weiche ist zwischen einem Erzeugerheizkreislauf (Primärkreis) und einem Abnehmerheizkreislauf (Sekundärkreis) eingebaut.

Hydraulische Weichen werden oftmals in Mehrkesselanlagen oder in Einkesselanlagen eingesetzt, wenn nur ein geringes Wasserumlaufvolumen vorhanden ist und die Leistung angepasst werden soll. Die Technik der hydraulischen Weichen wird ferner dafür eingesetzt, eine Unterversorgung des Verbrauchers (Abnehmers) zu vermeiden. Dies kann zum Beispiel der Fall sein, wenn die Wasserumlaufmenge des Wärmeverbrauchers (Sekundärkreis) größer ist als die des Heizkessels (Primärkreis). Eine hydraulische Weiche (allgemeiner ein Wärmereservoir) gewährt eine gleichbleibende Funktion bei allen Betriebszuständen. Gleichzeitig dient sie der Funktionserhaltung der Anlage, die auch einen bestimmten Volumendurchfluss benötigt. Die energieeffiziente Betriebsweise der hydraulischen Weiche bzw. des Wärmereservoirs wird in vielen Fällen jedoch nicht betrachtet. Dies führt zu unnötigen Energieverlusten.

In älteren Heizungsanlagen wird die Primärkreispumpe der Heizungsanlage meist nicht geregelt betrieben, sondern sie wird auf eine konstante Pumpendrehzahl eingestellt. In diesem Fall erfolgt keine bedarfsabhängige Anpassung des Massestroms in der Heizungsanlage. In Altanlagen mit nicht regelbarer Primärkreispumpe soll das erfindungsgemäße Verfahren nicht angewendet werden.

In moderneren Heizungsanlagen ist es üblich, dass die Primärkreispumpe von der Kesselsteuerung entweder direkt oder in Verbindung mit einem externen Steuerungsmodul geregelt wird. Wird die Drehzahl der Primärkreispumpe durch die Kesselsteuerung geregelt, so wird ein Temperaturfühler in der hydraulischen Weiche platziert. Zusätzlich wird die Kesselvorlauftemperatur messtechnisch mit einem Temperaturfühler erfasst und der Kesselsteuerung zur Verfügung gestellt. Dem Fachmann bekannte Konzepte zur Kesselsteuerung begrenzen die Differenz zwischen Kesselvorlauftemperatur und der am Ausgang der hydraulischen Weiche in den Sekundärkreis gemessenen Vorlauftemperatur.

Hierdurch wird jedoch noch kein bedarfs- und energieoptimierter Betrieb erreicht. Insbesondere zwischen dem Primärkreis und dem Sekundärkreis kommt es zu energetischen Verlusten und/oder Komforteinbußen, je nach Zustand der Heizungsanlage.

Dokument FR 2 634 873 A1 betrifft eine Vorrichtung zur Übertragung von Wärme zwischen einer Hauptquelle, die ein Wärmemedium erwärmt und hierfür auf einer konstanten Temperatur gehalten wird, und einer Vielzahl von Wärmetauschern. Ein zwischengeschalteter Pufferbehälter bildet mit der Quelle einen Primär- und mit den Wärmetauschern separate Sekundärkreisläufe. Innerhalb jedes Sekundärkreislaufs ist eine Rückführung von Wärmemedium über einen Bypass möglich. Eine Fördermenge einer primärseitigen Pumpe und eine Einstellung eines Regelventils werden zu Beginn so definiert, dass eine Fördermenge im Primärkreis erzielt wird, die der Summe der Fördermengen der Sekundärkreisläufe entspricht, sofern keine interne Rückführung im Sekundärkreislauf stattfindet. Um einen Strom durch den Pufferbehälter zu vermeiden, wird eine physische Begrenzung einer solchen Strömung vorgesehen. Bei Inbetriebnahme wird das System in einen Zustand der Überversorgung versetzt, sodass ein Volumenstrom vom primärseitigen Vorlauf zum primärseitigen Rücklauf entsteht.

Dokument DE 201 09 236 U1 offenbart ein Wärmetransportsystem mit einer oder mehreren volumenstromgeregelten Wärmeerzeugungseinrichtungen, umfassend einen Verbraucher- und einen Erzeugerkreis, die über einen Entkoppler miteinander verbunden sind. Im Verbraucherkreis ist eine Sensoreinrichtung vorgesehen, die den Durchsatz eines Wärmemediums im Verbraucherkreis misst. Eine Steuereinrichtung steuert die Aktivität einer im Erzeugerkreis vorgesehenen Pumpe nach Maßgabe der von der Sensoreinrichtung gemessenen Messgrößen derart, dass der Volumenstrom des Erzeugerkreises in einem vorgebbaren Verhältnis zu dem Volumenstrom des Verbraucherkreises steht. Insbesondere soll so der Betrag des Volumenstromes in dem Erzeugerkreis dem Betrag des Volumenstromes im Verbraucherkreis entsprechen.

Dokument DE 10 2015 014 378 A1 offenbart ein Verfahren zur Regelung einer Pumpe im Primärkreis einer Heizungsanlage, die einen Primärkreis mit mindestens einem Erzeugerkreis umfassend mindestens einen Wärmeerzeuger und einen mit diesem an einer Übergabestelle gekoppelten Sekundärkreis aufweist. Der Volumenstrom im Primärkreis wird in funktionaler Abhängigkeit von dem Volumenstrom des Sekundärkreises durch die Pumpe geregelt.

Aufgabe der Erfindung ist es, eine bedarfsgerechte Ansteuerung des Primärkreises einer Heizungsanlage vorzuschlagen, die einen energieeffizienteren Betrieb der Heizungsanlage ermöglicht.

Diese Aufgabe wird erfindungsgemäß durch ein Verfahren mit den Merkmalen des Anspruchs 1 und eine Heizungsanlage mit den Merkmalen des Anspruch 9 gelöst.

Im Rahmen des eingangs beschriebenen Verfahrens ist vorgesehen, dass durch Ansteuerung der Primärkreispumpe der primärseitige Massestrom $\dot{m}_P$ derart eingestellt wird, dass in dem Wärmeträgerreservoir keine Strömung von Wärmeträgermedium zwischen dem Vorlaufanschluss und dem Rücklaufanschluss (jeweils oder zusammengefasst bzw. insgesamt) des Primärkreises und des Sekundärkreises auftritt bzw. eine solche Strömung von Wärmeträgermedium in dem Wärmeträgerreservoir minimiert wird.

Wenn in dem Wärmeträgerreservoir keine Strömung von Wärmeträgermedium zwischen dem Vorlaufanschluss und dem Rücklaufanschluss von Primärkreis und Sekundärkreis auftritt, wird pro Zeitintervall genau die durch den Primärkreis eingetragene Wärmeenergie im Sekundärkreis verbraucht, d.h. durch die Wärmeverbraucher verwertet. Damit entspricht die eingetragene Energie genau der benötigten Energie; dies ist ein energetisch optimaler Zustand, der erfindungsgemäß angestrebt wird, in dem die Heizungsanlage mit Wärme weder überversorgt (Energieverluste) noch unterversorgt (Diskomfort) ist. In einem solchen energetisch optimierten Zustand findet erfindungsgemäß eine Strömung von Wärmeträgermedium in dem Wärmeträgerreservoir (im Wesentlichen) nur statt zwischen dem Vorlaufanschluss von Primärkreis und Sekundärkreis sowie zwischen Rücklaufanschluss von Primärkreis und Sekundärkreis, und zwar insbesondere von dem Vorlaufanschluss des Primäranschlusses zu dem Vorlaufanschluss des Sekundäranschlusses sowie von dem Rücklaufanschluss des Sekundärkreises zu dem Rücklaufanschluss des Primärkreises, und das obwohl eine Strömung zwischen den Vorlaufanschlüssen und Rücklaufanschlüssen von Primär- und Sekundärkreis nicht durch Sperren in dem Wärmeträgerreservoir unterbunden ist, beispielsweise durch geschlossene Kreise oder mechanische Trennungen, die einen Austausch von Wärmträgermedium verhindern. Erfindungsgemäß findet eine Strömung im Wesentlichen nur zwischen den Vorlaufanschlüssen und den Rücklaufanschlüssen jeweils von Primärkreis und Sekundärkreis statt, wenn mindestens 85%, vorzugsweise mindestens 90% und besonders bevorzugt mindestens 95% des Wärmeträgermediumstroms im Wärmeträgerreservoir diesem Strömungspfad folgt und nicht einer Querströmung zwischen den Vorlaufanschlüssen und den Rücklaufanschlüssen. Dies ist gleichbedeutend mit der Aussage, dass in dem Wärmeträgerreservoir keine Strömung von Wärmeträgermedium zwischen dem Vorlaufanschluss und dem Rücklaufanschluss jeweils oder zusammengefasst des Primärkreises und des Sekundärkreises auftritt bzw. eine solche Strömung von Wärmeträgermedium in dem Wärmeträgerreservoir minimiert wird.

Damit werden die hydraulischen Bedingungen an dem Wärmereservoir zwischen dem Primärkreis und dem Sekundärkreis optimiert. Dies führt zu einer hohen Systemeffizienz der gesamten Heizungsanlage.

Zudem ist in diesem energetisch und hydraulisch optimalen Zustand die Rücklauftemperatur im Primärkreis am niedrigsten, was zu einem optimalen Wirkungsgrad von Brennwertkesseln führt, sofern diese als Wärmeerzeuger eingesetzt werden. Brennwertkessel sind in vielen modernen Heizungsanlagen, da besonders energieeffiziente Wärmeerzeuger, zu finden.

Der optimale Zustand, dass in dem Wärmereservoir tatsächlich keine Strömung zwischen Vor- und Rücklaufanschluss von Primär- und Sekundärkreis auftritt, also die pro Zeiteinheit durch den Primärkreis eingetragene Wärmeenergie genau der im Sekundärkreis verbrauchten Wärmeenergie entspricht, ist in realen Anlagen nicht dauerhaft zu erreichen. Vor diesem Hintergrund ist eine Minimierung der Strömung im Wärmereservoir zum Erreichen des erfindungsgemäßen Ziels ausreichend. In einem solchen Zustand sind die pro Zeiteinheit eingetragene und verbrauchte Energie weitestgehend aneinander angeglichen. Insbesondere ist dieses Ziel erreicht, wenn die die Differenz von eingetragener und verbrauchter Wärmenergie betragsmäßig (also unabhängig von dem Vorzeichen) weniger als 15%, bevorzugt weniger als 10% und besonders bevorzugt weniger als 5% beträgt. Eine derartige Minimierung der Differenz zwischen eingetragener und verbrauchter Wärmeenergie ist im Sinne der Erfindung auch als "keine Strömung des Wärmeträgermediums im Wärmereservoir zwischen Vorlaufanschluss und Ausgang eines der Kreise (Primärkreis, Sekundärkreis)" anzusehen.

Das Einstellen des Massestroms kann erfindungsgemäß durch Einstellen der Pumpendrehzahl $n_{Pumpe}$ der Primärkreispumpe erfolgen. Zur Minimierung der Strömung bzw. dem Einstellen keiner Strömung im Wärmeträgerreservoir (im Sinne der beschrieben Ströme jeweils zwischen Eingang und Ausgang eines der Kreise bzw. insgesamt zwischen den Vorlaufanschlüssen und den Rücklaufanschlüssen) kann gemäß einer besonders bevorzugten Ausführungsform also eine Regelung und/oder Steuerung vorgesehen sein, die insbesondere die Pumpendrehzahl $n_{Pumpe}$ vorgibt. Grundsätzlich wäre aber jede Anpassung des Volumen- oder Massestroms im Primärkreis damit gleichbedeutend, bspw. auch durch das Vorsehen von Drosselventilen in der Primärkreispumpe selbst oder im Primärkreis. Alle Maßnahmen, die den Volumen- oder Massestrom des Wärmeträgermediums im Primärkreis beeinflussen, sind erfindungsgemäß als "Ansteuerung der Primärkreispumpe" zu verstehen. Der Begriff "Ansteuerung der Primärkreispumpe" ist also insbesondere synonym zu dem Begriff "Ansteuerung des Massestroms respektive Volumenstroms des Wärmeträgermediums im Primärkreis" zu verstehen. Massestrom und Volumenstrom des Wärmeträgermediums können über die spezifische Dichte $\rho$ des Wärmeträgermediums ineinander überführt werden, und werden daher im Sinne der Erfindung als gleichberechtigte Größen behandelt, die austauschbar sind.

Gemäß einer bevorzugten Ausgestaltung des Verfahrens können im Rahmen der Einstellung des primärseitigen Massestroms $\dot{m}_P$ als Paar von primärseitigen und sekundärseitigen Systemgrößen mindestens eines der nachfolgenden Wertepaare erfasst werden:

> (a) Temperaturdifferenz einer Vorlauftemperatur im Vorlaufanschluss und einer Rücklauftemperatur im Rücklaufanschluss, und zwar jeweils für den Primärkreis und den Sekundärkreis;
> (b) Massestrom jeweils für den Primärkreis und den Sekundärkreis.

Erfindungsgemäß kann anstelle des Massestroms auch ein Wärmekapazitätsstrom erfasst werden, der aus dem Produkt von Massestrom und spezifischer Wärmekapazität $c_p$ gebildet ist. Da in der Regel das Wärmeträgermedium im Primärkreis und im Sekundärkreis dasselbe ist, ist auch die spezifische Wärmekapazität $c_p$ gleich, so dass anstelle des Wärmekapazitätsstroms auch unmittelbar der Massestrom betrachtet werden kann. Im Sinne dieses Textes werden die Begriffe "Massestrom" und "Wärmekapazitätsstrom" synonym verwendet.

Das Erfassen der Systemgrößen kann erfindungsgemäß durch Messen mittels geeigneter Sensoren erfolgen, bspw. mittels Temperatursensoren zur Messung der Vorlauftemperatur und der Rücklauftemperatur im Primärkreis und im Sekundärkreis, mittels Masse- oder Volumenstrommessgeräten zur Messung des Massestroms im Primärkreis und im Sekundärkreis oder mittels Wärmezählern im Primärkreis oder im Sekundärkreis, die sowohl die Temperaturen im Vorlauf und Rücklauf als auch den Massestrom im Primärkreis und im Sekundärkreis messen. Je nach verwendeten Anlagenkomponenten (wie bspw. einer Heizkesselregelung) können bestimmte Systemgrößen in den Anlagenkomponenten bereits gemessen und über geeignete Schnittstellen analog oder digital abrufbar sein. In diesem Fall kann auf das Installieren zusätzlicher Sensoren verzichtet werden.

Erfindungsgemäß kann das Erfassen von Systemgrößen auch durch Ableiten aus bekannten Soll- oder Offsetwerten, bspw. für Temperaturen wie Heizkreissolltemperatur, Warmwassersolltemperatur, Offset der Kesselsolltemperatur zu Heizkreis- bzw. Warmwassersolltemperatur, oder der Kenntnis von bestimmten Betriebszuständen, bspw. einem Heizbetrieb oder einem Warmwasserbetrieb, abgeleitet werden. In diesem Fall werden die Systemgrößen, insbesondere Temperaturen, nicht direkt gemessen, sondern indirekt abgeleitet.

Insbesondere auf Grundlage der wie zuvor beschrieben erfassten, erfindungsgemäß aber auch aufgrund anderer erfasster Systemgrößen wird in einer besonders bevorzugten Ausführung des vorgeschlagenen Verfahrens vorgesehen, dass das Einstellen des primärseitigen Massestroms $\dot{m}_P$ durch Ansteuerung der Primärkreispumpe mittels eines Reglers erfolgt.

Heizungsanlagen im realen Betrieb sind dynamische Systeme, die auf unterschiedliche Wärmebedürfnisse und Wärmeeinträge (bspw. durch Personen im Raum, Sonneneinstrahlung, Fensterlüftung im Sinne eines negativen Wärmeeintrags) reagieren. Damit ändert sich die in der Heizungsanlage benötigte Energie. Vor diesem Hintergrund ist es sinnvoll, die Ansteuerung der Primärkreispumpe über einen Regler zu realisieren. Der Regler kann eine Regelung und/oder eine Steuerung aufweisen, die geeignete Systemgrößen erfassen (messen und/oder anderweitig bestimmen), daraus entsprechend eine Regelgröße für die Regelung und/oder eine Führungsgröße für die Steuerung ermitteln und mittels ihres Regel- und/oder Steueralgorithmus eine geeignete Stellgröße, insbesondere eine Pumpendrehzahl $n_{Pumpe}$ zur Einstellung des primärseitigen Massestroms, ableiten. Eine solcher Regler ist einfach umzusetzen und kann dynamisch auf Änderungen in der Heizungsanlage reagieren, wobei eine Regelung eine feinere Einstellung ermöglicht als eine Steuerung und robuster gegenüber Störungen ist. Gemäß einer besonders bevorzugten Ausführungsform kann auch eine kombinierte Steuerung und Regelung eingesetzt werden, wobei die Steuerung und die Regelung ggf. zu unterschiedlichen Zeiten aktiv sein können. Eine Steuerung arbeitet schneller und kann ggf. zur Führung des Regelkreises verwendet werden, d.h. das System (in dem die Regelung stattfindet und das damit den Regelkreis umfasst) in einen Zustand bringen, in dem nur noch ein geringer Nachregelbedarf besteht.

Eine bevorzugte Ausführungsform des erfindungsgemäß vorgeschlagenen Verfahren sieht vor, dass als eine Regelgröße das Verhältnis aus einer primärseitigen und einer sekundärseitigen Systemgröße gebildet wird und der Regler eine Regelung anwendet, mit der die Regelgröße auf Eins geregelt wird.

Das Verhältnis der primärseitigen und sekundärseitigen Masseströme respektive Wärmekapazitätsströme oder der primärseitigen und sekundärseitigen Temperaturdifferenzen (Vorlauftemperatur minus Rücklauftemperatur), das erfindungsgemäß besonders bevorzugt als Regelgröße verwendet werden kann, wird als Verhältnis $\mu$ bezeichnet und kennzeichnet das energetische Verhältnis zwischen Primärkreis und Sekundärkreis. Aus später noch erläuterten Gründen sollte dieses Verhältnis optimaler Weise eins sein (im Sinne eines Sollwerts der Regelgröße), so dass sich diese Verhältnis gut als Regelgröße für die erfindungsgemäß vorgeschlagene Regelung eignet.

Im Rahmen des vorgeschlagenen Verfahrens kann als eine weitere oder alternative Regelgröße aus dem Paar von Systemgrößen jeweils die Differenz aus einer primärseitigen und einer sekundärseitigen Systemgröße gebildet werden und der Regler eine Regelung anwenden, mit der die Regelgröße auf Null geregelt wird.

Wenn das Verhältnis aus primärseitiger und sekundärseitiger Systemgröße vorzugsweise auf Eins geregelt werden soll, ist dies gleichbedeutend damit, dass die Differenz aus diesen primärseitigen und sekundärseitigen Systemgröße auf Null geregelt wird. Regelungstechnisch kann - je nach verwendetem Regelalgorithmus - das Regeln auf eine Differenz einfacher sein als das Regeln auf ein Verhältnis. Ggf. können auch Regelalgorithmen zum Einsatz kommen, in denen beide Regelgrößen parallel eingesetzt werden, bspw. im Sinne einer gröberen Vorregelung und einer feineren Nachregelung.

Erfindungsgemäß kann bei Durchführung des Verfahrens in einer Ausführungsform vorgesehen sein, dass der Regler eine Steuerung anwendet, um die Primärkreispumpe anzusteuern.

Mit der Steuerung wird die Primärkreispumpe auf Basis einer Führungsgröße angesteuert. Die Führungsgröße kann insbesondere mit einer der vorbeschriebenen Regelgrößen identisch sein. Es sind jedoch auch Ausgestaltungen möglich, in der die Regelgrößen für die (Vor-)Steuerung und die Regelung verschieden sind.

In einer denkbaren, einfachen Ausgestaltung des erfindungsgemäß vorgeschlagenen Verfahrens kann der Regler ausschließlich eine Steuerung oder eine Regelung aufweisen.

Erfindungsgemäß bevorzugt können die Regelung und die Steuerung des Reglers parallel betrieben werden oder abwechselnd aktiviert werden. Gemäß einer besonders bevorzugten Ausführungsform der Erfindung kann die Steuerung als Vorsteuerung zu der Regelung ausgebildet werden. In diesem Fall erfolgt die Ansteuerung der Primärkreispumpe durch eine kombinierte Vorsteuerung und Regelung, bei der zunächst auf Basis einer Führungsgröße durch die Vorsteuerung eine Stellgröße für die Ansteuerung der Primärkreispumpe vorgegeben wird und nach Vorgabe der Stellgröße deren Auswirkung auf die Regelgröße in der Regelung nachgeregelt wird. In dieser Ausführungsform sind die Vorsteuerung und die Regelung erfindungsgemäß also hintereinander geschaltet. Die Vorsteuerung verbessert die Führung der Regelung (mit dem Regelkreis), ohne die Stabilität der Regelung zu beeinflussen oder zu gefährden. Ein solcher Regler wird im Rahmen dieser Erfindung auch als Systemregler bezeichnet. Ein Systemregler ist nach diesem Verständnis also ein Regler mit einer Vorsteuerung und einer nachgeschalteten Regelung.

Mögliche nachträgliche Optimierungen in der Regelung können stets ohne Anpassungen an der Vorsteuerung durchgeführt werden. Eine wechselseitige Beeinflussung findet nicht statt, weil die Vorsteuerung und die Regelung zwei grundsätzlich unabhängige Regelkonzepte bilden, die erfindungsgemäß parallel aber auch abwechselnd aktiv sein können, denn die Steuerung arbeitet im Gegensatz zur Regelung ohne eine Rückkopplung.

Insbesondere bei der Steuerung respektive Vorsteuerung, erfindungsgemäß aber auch oder nur bei der Regelung, kann vorgesehen sein, dass ein Sollmassestrom für den primärseitigen Massestrom ermittelt und die Primärkreispumpe zur Einstellung dieses primärseitigen Massestroms angesteuert wird, bzw. in einer allgemeineren Beschreibung im Sinne der Erfindung zur Ansteuerung eines primärseitigen Massestroms verwendet wird.

Eine bevorzugte Möglichkeit zur Ermittlung des Sollmassestroms $\dot{m}_{p,soll}$ des primärseitigen Massestroms kann darin liegen, aus dem wie vorstehend beschrieben ermittelten Verhältnis $\mu_{ist}$ und dem aktuellen (aktuell erfassten) primärseitigen Massestrom $\dot{m}_{p,ist}$ den Sollmassestrom $\dot{m}_{p,soll}$ als Quotient aus dem aktuellen primärseitigen Massestrom $\dot{m}_{p,ist}$ und ermittelten Verhältnis $\mu_{ist}$ abzuleiten, d.h. insbesondere entsprechend der Beziehung

$$\dot{m}_{p,soll} = \frac{\dot{m}_{p,ist}}{\mu_{ist}}$$

zu berechnen.

Hierbei wird ausgenutzt, dass das Verhältnis $\mu$ in einer energetisch optimal eingestellten Heizungsanlage eins betragen sollte. In Kenntnis eines Pumpenkennfelds und einer Anlagenkennlinie kann der primärseitige Sollmassestroms $\dot{m}_{p,soll}$ etwa durch Vorgabe der Pumpendrehzahl $n_{Pumpe}$ entsprechend eingestellt werden. Dies wird später noch genauer beschrieben, wobei das Pumpenkennfeld bekannt ist und die Anlagenkennlinie im Rahmen vorgenommener Messungen automatisiert ermittelt werden kann.

Einfacher Weise kann der Regler bei Ausführen der Regelung und/oder Steuerung als Stellgröße für die Ansteuerung der Primärkreispumpe zum Einstellen des primärseitigen Massestroms $\dot{m}_P$ eine Pumpendrehzahl $n_{Pumpe}$ ermitteln, die dann als Stellgröße der Primärkreispumpe aufgeschaltet werden kann. Erfindungsgemäß ist vorgesehen, dass zusätzlich zur Einstellung des primärseitigen Massestroms $\dot{m}_P$ die primärseitige Vorlauftemperatur $T_{VL,p}$ eingestellt wird, insbesondere derart, dass in dem Wärmeträgerreservoir keine Strömung von Wärmeträgermedium zwischen dem Vorlaufanschluss und dem Rücklaufanschluss des Primärkreises und des Sekundärkreises auftritt bzw. eine solche Strömung von Wärmeträgermedium in dem Wärmeträgerreservoir minimiert wird. Dies kann durch eine Ansteuerung des Wärmeerzeugers und/oder eines Mischventils zum Mischen von Vor- und Rücklauf im Primärkreis erfolgen. Eine Anpassung der Vorlauftemperatur ist insbesondere dann sinnvoll, wenn eine Anpassung des Massestroms $\dot{m}_P$ des Wärmeträgermediums im Primärkreis nicht mehr oder nicht mehr sinnvoll möglich ist, bspw. weil die Pumpendrehzahl der Primärkreispumpe nicht soweit veränderbar ist oder aus einen sinnvollen Drehzahlbereich für die Primärkreispumpe herausfiele.

Die Ansteuerung von Primärkreispumpe (einschließlich Drosselventile oder dgl.) zur Einstellung des Massestroms und/oder von Wärmeerzeuger (einschließlich Mischer oder dgl.) zur Einstellung der Vorlauftemperatur im Primärkreis kann bspw. durch den Regler über geeignete Schnittstellen erfolgen, die das Einstellen von Massestrom respektive Vorlauftemperatur im Primärkreis erlauben, bspw. durch Vorgabe fester Stellwerte oder durch Vorgabe von Korrekturwerten zu einer eigenständigen Primärkreisregelung, bspw. einer Kesselregelung.

Die Erfindung bezieht sich ferner auf eine Heizungsanlage mit einer Vorrichtung zur Ansteuerung des Primärkreises einer Heizungsanlage mit den Merkmalen des Anspruchs 9. Die Heizungsanlage hat einen Primärkreis und einen Sekundärkreis für ein Wärmeträgermedium, wobei Primärkreis und Sekundärkreis über ein mit Wärmeträgermedium gefülltes Wärmeträgerreservoir miteinander verbunden sind, so dass jeweils ein Vorlaufanschluss und ein Rücklaufanschluss des Primärkreises und ein Vorlaufanschluss und ein Rücklaufanschluss des Sekundärkreises in das Wärmeträgerreservoir münden. Es sind in dem Primärkreis mindestens ein Wärmeerzeuger zur Erwärmung des Wärmeträgermediums auf eine primärseitige Vorlauftemperatur $T_{VL,p}$ sowie eine Primärkreispumpe zum Erzeugen eines primärseitigen Massestroms $\dot{m}_P$ des Wärmeträgermediums und in dem Sekundärkreis mindestens ein Wärmeverbraucher angeordnet, wobei die Vorrichtung eine Steuerschnittstelle zu einer Steuereinrichtung zum Einstellen des primären Massestroms $\dot{m}_P$ im Primärkreis und eine Regeleinrichtung aufweist. Die Regeleinrichtung hat einen Regler, der zur Durchführung des vorbeschrieben Verfahrens oder Teilen davon eingerichtet ist.

Die Steuerschnittstelle kann erfindungsgemäß als Schnittstelle zu der Primärkreispumpe ausgebildet sein, über die die Pumpendrehzahl $n_{Pumpe}$ der Primärkreispumpe vorgebbar und einstellbar ist. Diese kann als digitale oder analoge Schnittstelle ausgebildet sein, im Falle einer analogen Schnittstelle bspw. als 0 bis 10 Volt Schnittstelle, bei der durch Vorgabe einer entsprechenden Spannung zwischen 0 und 10 Volt durch die Steuerschnittstelle die Pumpendrehzahl $n_{Pumpe}$ an der Primärkreispumpe eingestellt wird.

Erfindungsgemäß kann die Regeleinrichtung eine Schnittstelle, bspw. auch als Regler- und/oder Steuerschnittstelle bezeichnet, zu Erfassungsgeräten von Systemgrößen der Heizungsanlage aufweisen. Erfassungsgeräte können Messgeräte sein, die analog oder digital an die analoge oder digitale Schnittstelle der Regeleinrichtung anschließbar sind, insbesondere Temperatursensoren, Wärmezähler, Masse- oder Volumenstrommessgeräte. Erfassungsgerät können auch digitale Kommunikationsgeräte sein, die zum Zugriff auf Systemgrößen der Heizungsanlage und/oder zum Zugriff auf ein Steuergerät der Heizungsanlage eingerichtet sind, bspw. ein Steuergerät der Wärmeerzeugungsanlage wie eine Kesselsteuerung, eine Steuerung des Wärmereservoirs, eine Energiemonitoring- und Steuergerät oder dgl. Geräte.

Erfindungsgemäß können die Erfassungs- und/oder Messgeräte auch Teil der erfindungsgemäßen Vorrichtung und mit dieser fest oder lösbar verbunden sein. Die Steuereinrichtung und/oder die Regeleinrichtung können erfindungsgemäß auch in ein Steuergerät der Heizungsanlage integriert sein.

In einer Ausführungsform kann auch vorgesehen sein, dass die Steuer- und Regeleinrichtung in einem separaten Gerät in der Heizungsanlage angeordnet ist. Die Anbindung an die Heizungsanlage erfolgt dann über die Steuer- oder/und die Schnittstelle der Regeleinrichtung (Regler-Schnittstelle). Der Regelalgorithmus (Steuerung und/oder Regelung) ist vorzugweise in der Regeleinrichtung, bspw. Prozessoreinheit der Regeleinrichtung, implementiert. Die Steuereinrichtung erzeugt die Stellbefehle an die Heizungsanlage, insbesondere die Primärkreispumpe zum Einstellen des primärseitigen Massestrom und/oder den Wärmeerzeuger zum Einstellen primärseitigen Vorlauftemperatur $T_{VL,p}$.

In einer anderen Ausführungsform können die Steuereinrichtung und/oder die Regeleinrichtung in einem separaten Gerät entfernt von der Heizungsanlage angeordnet sein, und die Steuerschnittstelle und/oder die Reglerschnittstelle können eine Fernkommunikationseinheit umfassen. Besonders vorteilhaft ist es, wenn die Steuer- und/oder Reglerschnittstelle als Fernübertragungsschnittstelle ausgebildet ist und - als Fernsteuerungsschnittstelle - die Steuerung durch das Übertragen von entsprechende Stellbefehle aus dem IT-System an die Steuereinrichtung und/oder Regeleinrichtung durchgeführt wird.

Damit muss die Implementierung der Steuer- und/oder Regelalgorithmen nicht am Ort der Heizungsanlage, bspw. in einer Kesselsteuerung oder dem Gebäude der Heizungsanlage, erfolgen, sondern kann auch in einem zentralen IT-System bspw. eines Abrechnungs- und/oder Energiemonitoring-Dienstleisters vorhanden sein, in dem die für die Durchführung der Erfindung benötigten Systemgrößen ohnehin erfasst sind. In der Regel sind diese zentralen IT-Systeme über eine geeignete Fernkommunikationseinheit, bspw. umfassend eine Mobilfunkkommunikation, mit der Heizungsanlage verbunden oder verbindbar. In diesem Fall kann der erfindungsgemäße Regler auch entfernt von der Heizungsanlagen in einem zentralen IT-System realisiert sein. Dies hat den Vorteil, dass das Verfahren ohne, zumindest ohne nennenswerte, Installation vor Ort umsetzbar ist.

Weitere Vorteile, Merkmale und Anwendungsmöglichkeiten der Erfindung ergeben sich auch aus der nachfolgenden Beschreibung von Ausführungsbeispielen und der Zeichnung. Dabei gehören alle beschriebenen und/oder bildlich dargestellten Merkmale zusammen oder in beliebiger fachmännisch sinnvoller Kombination zum Gegenstand der Erfindung, wobei die Erfindung in den Ansprüchen definiert ist.

Es zeigen:

Fig. 1    schematisch ein Wärmereservoir einer Heizungsanlage in einem energetisch optimalen Zustand, wie er erfindungsgemäß angestrebt wird;

Fig. 2    schematisch ein Wärmereservoir einer Heizungsanlage in einem energetisch überversorgten Zustand;

Fig. 3    schematisch ein Wärmereservoir einer Heizungsanlage in einem energetisch unterversorgten Zustand;

Fig. 4    schematische eine Heizungsanlage zur Anwendung des erfindungsgemäßen Verfahrens nach einer ersten Ausführungsform;

Fig. 5    schematisch ein Blockdiagramm eines erfindungsgemäßen Regelkreises eines Reglers für eine Heizungsanlage gemäß Fig. 4 in einer ersten Ausführung;

Fig. 6    schematisch ein Blockdiagramm eines erfindungsgemäßen Regelkreises eines Reglers für eine Heizungsanlage gemäß Fig. 4 in einer zweiten Ausführung;

Fig. 7    ein beispielhaftes Regelverhalten eines Reglers gemäß Fig. 6;

Fig. 8    beispielhaft eine Diagrammdarstellung des Zusammenhangs zwischen Pumpendrehzahl und Volumenstrom (respektive Massestrom);

Fig. 9    beispielhaft ein Pumpenkennlinienfeld mit einer Anlagenkennlinie;

Fig. 10    schematische eine Heizungsanlage zur Anwendung des erfindungsgemäßen Verfahrens nach einer zweiten Ausführungsform;

Fig. 11    schematische eine Heizungsanlage zur Anwendung des erfindungsgemäßen Verfahrens nach einer dritten Ausführungsform;

Fig. 12 schematische eine Heizungsanlage zur Anwendung des erfindungsgemäßen Verfahrens nach einer vierten Ausführungsform;

Fig. 13 schematische eine Heizungsanlage zur Anwendung des erfindungsgemäßen Verfahrens nach einer fünften Ausführungsform; und

Fig. 14 schematische eine Heizungsanlage zur Anwendung des erfindungsgemäßen Verfahrens nach einer sechsten Ausführungsform.

In der nachfolgenden Beschreibung konkreter Ausführungsbeispiele der Erfindung wird bespielhaft eine Warmwasserheizungsanlage mit einem Heizkessel als Wärmeerzeuger, einer Kesselkreispumpe als Primärkreispumpe, einer hydraulischen Weiche als Wärmeträgerreservoir und einem Sekundärkreis beschrieben, in dem Wärmeverbraucher angeordnet sind. Entsprechend werden auch diese speziellen Begriffe zur Beschreibung verwendet. Der Fachmann versteht, dass das die in diesem Zusammenhang konkret und beispielhaft beschrieben Merkmale allgemein für alle Heizungsanlagen mit verschiedenen Ausführungsarten von Wärmeträgerreservoiren, Wärmeerzeugern, Primärkreispumpen, Primärkreisen und Sekundärkreisen umgesetzt werden können, und nicht auf die konkret beschriebenen Heizungsanlagen beschränkt sind.

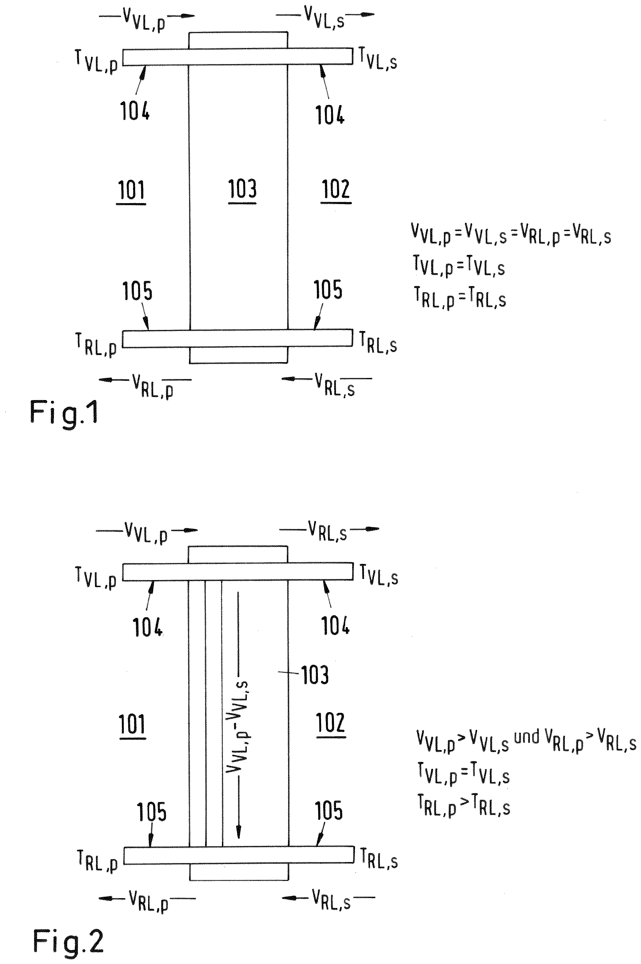

In den nachstehend beschrieben Fig. 1 bis Fig. 3 sind von einer Heizungsanlage 100 mit einem Primärkreis 101 und einen Sekundärkreis 102 jeweils nur die den Primärkreis 101 und den Sekundärkreis 102 verbindende hydraulische Weiche 103 als Wärmeträgerreservoir mit jeweils einem Vorlaufanschluss 104 und einem Rücklaufanschluss 105 des Primärkreises 101 und einem Vorlaufanschluss 104 und ein Rücklaufanschluss 105 des Sekundärkreises 102. Als Betriebszustände der hydraulischen Weiche 103 lassen sich drei verschiedene Zustände unterscheiden.

Grundsätzlich gilt in allen Betriebszuständen, dass der primärseitige Volumenstrom im Vorlauf $V_{VL,P}$ immer gleich dem primärseitige Volumenstrom im Rücklauf $V_{RL,P}$ und der sekundärseitige Volumenstrom im Vorlauf $V_{VL,S}$ immer gleich dem sekundärseitig Volumenstrom im Rücklauf $V_{RL,S}$ sind.

Im in Fig. 1 gezeigten Betriebszustand "Normalbetrieb", der dem erfindungsgemäß energetisch optimierten Zustand der hydraulischen Weiche 103 entspricht, ist der Volumenstrom im Primärkreis gleich dem Volumenstrom im Sekundärkreis. Das bedeutet, dass der primärseitige Volumenstrom im Vorlauf $V_{VL,P}$ und der sekundärseitige Volumenstrom im Vorlauf $V_{VL,S}$ gleich groß sind. Der sekundärseitige Volumenstrom im Rücklauf $V_{RL,S}$ ist ebenfalls gleich mit dem primärseitigen Volumenstrom im Rücklauf $V_{RL,P}$. In diesem Betriebszustand sind alle Volumenströme gleich groß. Der Betriebszustand "Normalbetrieb" der hydraulischen Weiche 103 ist bzgl. der Volumenströme also gekennzeichnet durch die Beziehung

$$V_{VL,P} = V_{VL,S} = V_{RL,S} = V_{RL,P}.$$

Für die Temperaturen an Eingang und Ausgang der hydraulischen Weiche 103 ergibt sich im Betriebszustand "Normalbetrieb", dass die primärseitige Vorlauftemperatur $T_{VL,p}$ des Wärmeträgermediums gleich der sekundärseitigen Vorlauftemperatur $T_{VL,s}$ des Wärmeträgermediums ist und die sekundärseitige Rücklauftemperatur $T_{RL,s}$ des Wärmeträgermediums gleich der primärseitigen Rücklauftemperatur $T_{RL,p}$ des Wärmeträgermediums ist. Der Betriebszustand "Normalbetrieb" der hydraulischen Weiche 103 ist bzgl. der Temperaturen gekennzeichnet durch die Beziehungen $T_{VL,p} = T_{VL,s}$ und $T_{RL,s} = T_{RL,p}$.

In einem zweiten Betriebszustand, bei dem eine "zu geringe Abnahme" der Wärmeleistung durch die Wärmeverbraucher im Sekundärkreis 102 erfolgt, fließt ein Teil des Volumenstroms vom Vorlauf des Primärkreise durch die hydraulische Weiche 103 direkt zurück in den kälteren Rücklauf des Primärkreises. Somit ist der primärseitige Volumenstrom im Vorlauf $V_{VL,P}$ größer als der sekundärseitige Volumenstrom im Vorlauf $V_{VVL,S}$. Der primärseitige Volumenstrom im Rücklauf $V_{RL,P}$ ist, da der primärseitig Volumenstrom im Vorlauf $V_{VL,P}$ immer gleich dem primärseitigen Volumenstrom im Rücklauf $V_{RL,P}$ ist, ebenfalls größer als der sekundärseitig Volumenstrom im Rücklauf $V_{RL,S}$. Der Betriebszustand "zu geringe Abnahme" der hydraulischen Weiche 103 ist bzgl. der Volumenströme gekennzeichnet durch die Beziehung $V_{VL,P} > V_{VL,S}$ und $V_{RL,P} > V_{RL,S}$. Der Teilstrom, der durch die hydraulische Weiche 103 fließt, ergibt sich aus der Differenz $V_{VL,P} - V_{VL,S}$.

Für die Temperaturen an Eingang und Ausgang der hydraulischen Weiche 103 ergibt sich bei dem Betriebszustand "zu geringe Abnahme", dass die primärseitig Vorlauftemperatur $T_{VL,p}$ des Wärmeträgermediums zwar gleich der sekundärseitigen Vorlauftemperatur $T_{VL,s}$ des Wärmeträgermediums ist, die primärseitige Rücklauftemperatur $T_{RL,p}$ des Wärmeträgermediums ist dagegen höher als die sekundärseitige Rücklauftemperatur $T_{RL,s}$ des Wärmeträgermediums. Der Betriebszustand "zu geringe Abnahme" der hydraulischen Weiche 103 ist bzgl. der Temperaturen gekennzeichnet durch die Beziehungen $T_{VL,p} = T_{VL,s}$ und $T_{RL,p} > T_{RL,s}$.

In diesem Betriebszustand "zu geringe Abnahme" steht bei dem primärseitigen Volumenstrom $V_{VL,P}$ und Vorlauftemperatur $T_{VL,p}$ mehr Wärmeenergie bereit, als sekundärseitig abgenommen wird.

In einem dritten Betriebszustand, bei dem eine "zu große Abnahme" der Wärmeleistung durch die Wärmeverbraucher im Sekundärkreis 102 erfolgt, also eine "Unterversorgung der Wärmeverbraucher" auftritt, fließt ein Teil des Volumenstroms $V_{RL,S}$ vom Rücklauf des Sekundärkreises durch die hydraulische Weiche 103 direkt zurück in den Vorlauf des Sekundärkreises. Somit ist der primärseitige Volumenstrom im Vorlauf $V_{VL,P}$ kleiner als der sekundärseitige Volumenstrom im Vorlauf $V_{VL,S}$. Der primärseitig Volumenstrom im Rücklauf $V_{RL,P}$ ist, da der primärseitig Volumenstrom im Vorlauf $V_{VL,P}$ immer gleich dem primärseitigen Volumenstrom im Rücklauf $V_{RL,P}$ ist, ebenfalls kleiner als der sekundärseitige Volumenstrom im Rücklauf $V_{RL,S}$. Der Betriebszustand "zu hohe Abnahme" ist bzgl. der Volumenströme gekennzeichnet durch die Beziehung $V_{VL,P} < V_{VL,S}$ und $V_{RL,P} < V_{RL,S}$. Der Teilstrom, der durch die hydraulische Weiche 103 fließt, ergibt sich aus der Differenz $V_{VL,S} - V_{VL,P}$.

Für die Temperaturen an Eingang und Ausgang der hydraulischen Weiche 103 ergibt sich beim diesem Betriebszustand "zu große Abnahme", dass durch den Volumenstrom von kälterem Wärmeträgermedium aus dem Rücklauf des Sekundärkreises über die hydraulische Weiche 103 in den Vorlauf des Sekundärkreise die primärseitige Vorlauftemperatur $T_{VL,p}$ des Wärmeträgermediums größer als die sekundärseitige Vorlauftemperatur $T_{VL,s}$ des Wärmeträgermediums ist. Die primärseitige Rücklauftemperatur $T_{RL,p}$ des Wärmeträgermediums ist dagegen gleich der sekundärseitigen Rücklauftemperatur $T_{RL,s}$ des Wärmeträgermediums. Der Betriebszustand "zu hohe Abnahme" ist bzgl. der Temperaturen gekennzeichnet durch die Beziehungen: $T_{VL,p} > T_{VL,s}$ und $T_{RL,p} = T_{RL,s}$.

In diesem Betriebszustand "zu große Abnahme" könnte bei dem sekundärseitigem Volumenstrom $V_{VL,S}$ im Vorlauf mehr Wärmeenergie abgenommen werden, als bei primärseitigem Volumenstrom $V_{VL,P}$ und Vorlauftemperatur $T_{VL,p}$ zur Verfügung steht.

Es entspricht einer erfindungsgemäßen Feststellung, dass eine dem Fachmann aus dem Stand der Technik bekannte Kesselsteuerung durch das Messen nur der Vorlauftemperatur $T_{VL,p}$ im Primärkreis (bspw. in der Kesselsteuerung selbst) und einem weiteren Temperaturfühler in der hydraulischen Weiche 103 nicht zwischen dem Betriebszustand "Normalbetrieb" und dem Betriebszustand "zu geringen Abnahme" unterscheiden kann.

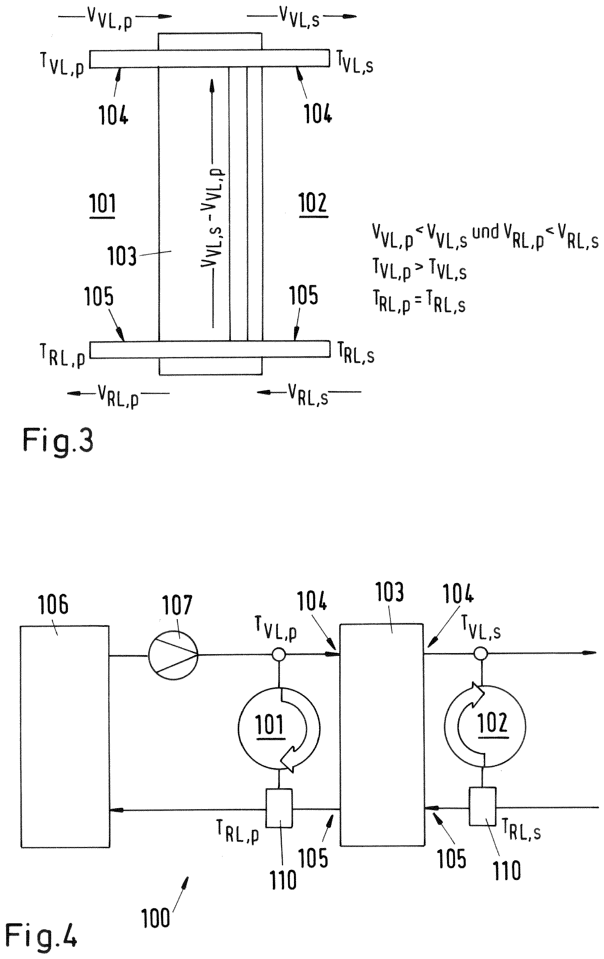

Für die Kesselsteuerung, die mit dem im Stand der Technik bekannten Konzept arbeitet und dabei nur die Differenz zwischen (primärseitigen) Kesselvorlauftemperatur $T_{VL,p}$ und der an der hydraulischen Weiche 103 gemessenen (sekundärseitigen) Vorlauftemperatur $T_{VL,s}$ verwendet, besteht lediglich die Möglichkeit, die "Unterversorgung der Verbraucher" festzustellen, d.h. den Betriebszustand "zu große Abnahme" gemäß Fig. 3. Ein energieeffizienter Betrieb der Heizungsanlage 100 kann daher mit einer im Stand der Technik bekannten Steuerung nicht erreicht werden.

Ein zusätzliches Problem bei der Ansteuerung des Primärkreises 101 der Heizungsanlage 100 nur über die gemessenen Temperaturwerte $T_{VL,p}$ und $T_{VL,s}$ mittels entsprechenden Temperaturfühlern kann in der unterschiedlichen Messgenauigkeit (Sensitivität) des Temperaturfühlers in der hydraulischen Weiche 103 zur Messung der sekundärseitigen Vorlauftemperatur $T_{VL,s}$ und des Vorlauftemperaturfühlers am Kesselausgang zur Messung der primärseitigen Vorlauftemperatur $T_{VL,p}$ liegen. Eine daraus abgeleitete Regelgröße "Vorlauftemperaturdifferenz" ist in solch einem Regelungskonzept daher zusätzlich, insbesondere bei einer unsachgemäßen Montage und/oder bei unterschiedlicher thermischer Ankopplung der Temperaturfühler (Einbau des Temperaturfühlers in einer Tauchhülse oder direkt eintauchender Temperaturfühler), mit messtechnischen Unsicherheiten behaftet.

Bei Heizungsanlagen mit Brennwertkesseln wird der Wirkungsgrad des Brennwertkessels wesentlich durch die Temperatur des Wärmeträgermediums (Heizmediums) bestimmt, die dem Brennwertkessel als Wärmeerzeuger zur Erwärmung im Rücklauf zugeführt wird (primärseitige Rücklauftemperatur $T_{RL,p}$). Diese Temperatur setzt sich aus den sekundärseitigen Temperaturen des Wärmeträgermediums im Rücklauf zusammen (bspw. der Heizkreise und eines Warmwasserspeicher-Ladezweiges, sofern dieser bei einer Warmwasserbereitung in Betrieb ist). Um einen möglichst hohen feuerungstechnischen Wirkungsgrad FTW zu erzielen ist es notwendig, eine möglichst geringe Rücklauftemperatur am Rücklaufeingang des Heizkessels zu erreichen.

Entsprechend der Erfindung ist angestrebt, eine Heizungsanlage 100 mit einer hydraulischen Weiche 103 zum Erreichen eines möglichst hohen Wirkungsgrads, insbesondere von Brennwertkesseln, aber auch anderen Wärmeerzeugern, im Betriebszustand "Normalbetrieb" zu betreiben, das heißt, die Volumenströme und Temperaturen verhalten sich dann so, als wäre die hydraulische Weiche 103 nicht vorhanden. Mit anderen Worten soll in der hydraulischen Weiche kein Wärmeträgermediumstrom zwischen den Vorlaufanschlüssen 104 und dem Rücklaufanschlüssen 105 auftreten

Wenn die Wärmeverbraucher (bspw. im Heizkreis und/oder bei der Warmwasserbereitung) weniger Wärmeträgermedium-Volumenstrom abnehmen als der Heizkessel liefert, verändern sich die Strömungsverhältnisse und die primärseitige Rücklauftemperatur $T_{RL,p}$ steigt an. Hierdurch sinkt der Wirkungsgrad der Wärmeerzeugung. Zusätzlich ist die Förderleistung der primärseitigen Kesselpumpe (Umwälzpumpe oder Primärkreispumpe) bzgl. des Bedarfs der Wärmeverbraucher (Abnehmer) zu hoch. Die Primärkreispumpe verbraucht unnötig viel Strom.

Wenn die Wärmeverbraucher mehr Volumenstrom abnehmen, als die Primärkreispumpe liefert, verändern sich die Strömungsverhältnisse und die sekundärseitige Vorlauftemperatur $T_{VL,s}$ sinkt. Der Bedarf der Wärmeverbraucher kann dann nicht gedeckt werden. Damit die Wärmeverbraucher noch genügend Wärme geliefert bekommen, muss die Kesselvorlauftemperatur oder der primärseitige Volumenstrom angehoben werden, was bspw. durch die Kesselsteuerung oder auch durch einen erfindungsgemäßen Regler erfolgen kann.

Um einen energieeffizienten Betrieb der Heizungsanlage 100 zu erreichen, wird erfindungsgemäß das Ziel verfolgt, einen Volumenstrom von Wärmeträgermedium über die hydraulische Weiche 103 (d.h. innerhalb der hydraulischen Weiche zwischen den Vorlautemperaturanschlüssen 104 und den

Rücklauftemperaturanschlüssen 105) zu vermeiden, so dass der primärseitige Volumenstrom $\dot{V}_P$ dem sekundärseitigen Volumenstrom $\dot{V}_S$ entspricht (d.h.

$$\dot{V}_{VL,P} = \dot{V}_{VL,S} = \dot{V}_{RL,S} = \dot{V}_{RL,P}).$$

Dies wird mit den erfindungsgemäß vorgeschlagenen Verfahren und Vorrichtung durch ein Regelungskonzept und eine Regelung für einen energieeffizienten Betrieb der Heizungsanlage 100 mit hydraulischer Weiche 103 erreicht. Die Erfindung optimiert durch die bedarfsgerechte Regelung die hydraulischen Bedingungen an der hydraulischen Weiche 103 und damit die Systemeffizienz der Heizungsanlage 100.

Unter bedarfsgerechter Regelung wird hier verstanden, dass die Regelung der Rücklauftemperatur im Primärkreis $T_{RL,p}$ in Abhängigkeit der variablen Heizlasten (bspw. der Abnehmer/Verbraucher in den Wohnungen) so gestaltet wird, dass möglichst in allen real auftretenden Lastzuständen die minimal mögliche Rücklauftemperatur erreicht wird. In den meisten Betriebspunkten der Heizungsanlage 100 kann dann die Pumpendrehzahl $n_{Pumpe}$ reduziert werden. Dadurch sinkt die Förderhöhe und damit die mechanische Pumpenleistung und der Stromverbrauch der Pumpe, selbst wenn bei einer geringeren Fördermengen ggf. ein geringerer mechanischer Pumpenwirkungsgrad zu erwarten ist.

Durch die erfindungsgemäße bedarfsgerechte Regelung wird somit einerseits eine reduzierte elektrische Leistungsaufnahme der Pumpe und andererseits ein reduzierter Volumenstrom im Primärkreis erreicht. Zudem wird aufgrund des Regelkonzepts eine Rücklauftemperaturanhebung durch die hydraulische Weiche vermieden.

Im Folgenden wird der Begriff des Volumenstrom $\dot{V}$ mit dem Begriff Massenstrom $\dot{m}$ synonym verwendet, da

$$\dot{V} = \frac{\dot{m}}{\rho}$$

es sich bei dem Heizmedium um Wasser bzw. ein Wassergemisch mit bekannter spezifischer Dichte $\rho$ handelt (
). Der Wärmestrom $\dot{Q}$ ergibt sich aus dem Massenstrom $\dot{m}$ der mittleren Dichte $\rho$ und der spezifischen Wärmekapazität $c_p$ des Heizmediums.

Die Anwendung des 1. Hauptsatzes der Thermodynamik (Energieerhaltungssatz) über die hydraulische Weiche 101 führt zu der Beziehung

$$0 = \dot{m}_p \cdot c_p \cdot \left( T_{RL,p} - T_{VL,p} \right) + \dot{m}_s \cdot c_p \cdot \left( T_{VL,s} - T_{RL,s} \right),$$

die unter der in der Praxis mit ausreichender Genauigkeit zutreffenden Annahme steht, dass die (thermisch gegen die Abgabe von Strahlungswärme gut isolierte) hydraulische Weiche 103 nicht im Wärmeaustausch mit der Umgebung steht und die Temperaturabhängigkeit der spezifischen Wärmekapazität $c_p$ im betrachteten Temperaturbereich vernachlässigt werden kann.

Aus dem 1. Hauptsatz der Thermodynamik lässt sich das Verhältnis der Wärmekapazitätsströme $\mu$ wie folgt beschreiben:

$$\mu = \frac{\dot{m}_p \cdot c_p}{\dot{m}_s \cdot c_p} = \frac{T_{VL,s} - T_{RL,s}}{T_{VL,p} - T_{RL,p}} = \frac{\Delta T_s}{\Delta T_p}$$

Für das Verhältnis der Wärmekapazitätsströme ergeben sich die folgenden fünf Fälle:

$\mu \to 0$ Die Kesselkreispumpe 107 ist aus.

$\mu < 1$ Die $T_{VL,s}$[OBJ] im Sekundärkreis 102 $T_{VL,p}$[OBJ] im Primärkreis 101. Dies entspricht dem Betriebszustand "zu hohe Abnahme; Verbraucher sind unterversorgt" der hydraulischen Weiche 103.

$\mu = 1$ Die hydraulische Weiche 103 ist strömungstechnisch eliminiert. Dies entspricht dem Betriebszustand der hydraulischen Weiche "Normalbetrieb".

$\mu > 1$ Die Rücklauftemperatur $T_{RL,p}$ im Primärkreis 101 ist zu hoch. Dies entspricht dem Betriebszustand "zu geringe Abnahme; Verbraucher sind überversorgt" der hydraulischen Weiche 103.

$\mu \rightarrow \infty$ Es besteht kein Wärmebedarf im Sekundärkreis 102.

Die Erfindung ermöglicht eine energieeffiziente Betriebsführung der Heizungsanlage 100 mit hydraulischer Weiche 103 durch Ansteuerung des Primärkreises 101 der Heizungsanlage 100, indem gemäß einer bevorzugen Ausführungsform auf gleiche Masseströme $\dot{m}_P$ im Primärkreis 101 und $\dot{m}_s$ im Sekundärkreis 102 eingeregelt wird, also auf $\mu = 1$. Für das erfindungsgemäße Regelkonzept ist in dieser Ausführungsform die Regelgröße das Verhältnis der Wärmekapazitätsströme $\mu$ und die Stellgröße ist die Pumpendrehzahl $n_{Pumpe}$ der Kesselkreispumpe. Für $\mu \rightarrow 0$ oder $\mu \rightarrow \infty$ besteht keine regelungstechnische Aufgabe, hier die Kesselkreispumpe ausgeschaltet ist ($\mu \rightarrow 0$) bzw. werden kann ($\mu \rightarrow \infty$).

Die Regelgröße $\mu$ kann auf unterschiedliche Weisen erfasst werden.

Im einfachsten Fall wird der primärseitige Massenstrom $\dot{m}_p$ und der sekundärseitigen Massenstrom $\dot{m}_s$ messtechnisch beispielsweise mit jeweils einem Wärmezähler 110 erfasst. Diese Ausführungsform der Heizungsanlage 100 ist in Fig. 4 gezeigt mit einem geschlossenen darstellten Primärkreis 101 mit einem Heizkessel 106 (bspw. Brennwertkessel) als Wärmeerzeuger und einer Kesselkreispumpe 107 als Primärkreispumpe.

Der Sekundärkreis 102 ist offen (ohne Wärmeverbraucher) dargestellt.

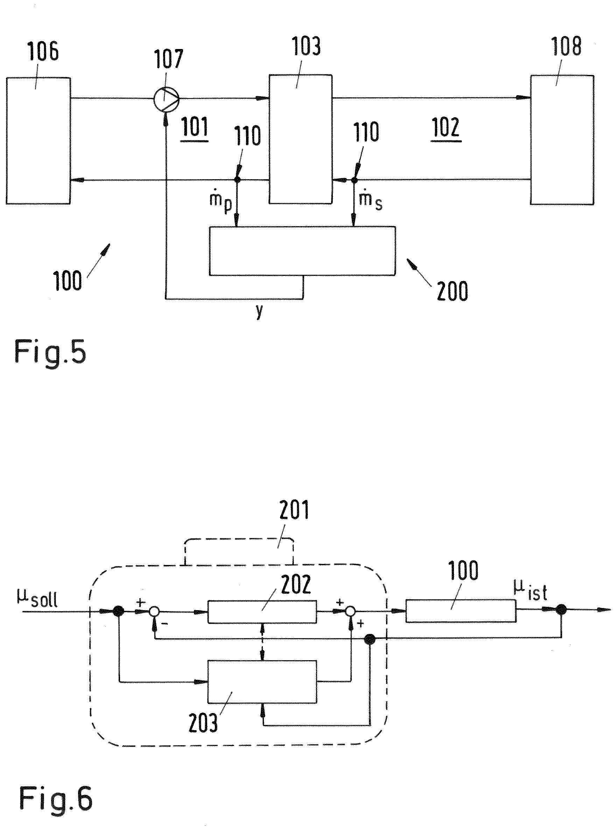

Sowohl im Primärkreis 101 als auch im Sekundärkreis 102 ist jeweils ein Wärmezähler 110 vorgesehen, der jeweils den Massestrom $\dot{m}$ als auch die Temperatur TVL im Vorlauf und im Rücklauf misst. Diese Werte werden dann von einem erfindungsgemäßen Regler 200 verwertet, wie nachfolgend mit Bezug auf Fig. 5 und 6 beschrieben. Die Messwerte müssen dafür in einer für die Regelungsaufgabe hinreichend hohen Auflösung und einem Messzyklus erfasst werden, die der Fachmann geeignet festlegen kann entsprechend der Heizungsanlage 100.

Der Wärmezähler 110 kann jeweils entweder im Vorlauf oder im Rücklauf von Primärkreis 101 und Sekundärkreis 102 installiert sein; die Masseströme im Vorlauf und im Rücklauf jedes der Kreise Primärkreis 101 und Sekundärkreis 102 sind gleich. In den meisten Fällen (und im Speziellen im eingeregelten Zustand, also $\mu \rightarrow 1$) ist kein großer Temperaturunterschied zwischen Primär- und Sekundärkreis zu erwarten, so dass das Verhältnis der temperaturabhängigen spezifischen Wärmekapazitäten $c_p$ nicht berücksichtigt werden muss, da sie sich nicht unterscheiden.

Fig. 5 zeigt einen Regelkreis eines Reglers 200 für die Heizungsanlage 100, wobei in Fig. 5 die Heizungsanlage mit einen durch Wärmeverbraucher 108 geschlossenen Sekundärkreis 102 wiedergegeben ist.

Die Wärmezähler 110 in dem Primärkreis 101 und in dem Sekundärkreis 102 erfassen jeweils den primärseitigen Massestrom $\dot{m}_P$ und den sekundärseitigen Massestrom $\dot{m}_s$, die dem Regler 200 zur Verfügung stehen. Der Regler 200 ermittelt daraus als Istwert der Regelgröße das Verhältnis der Wärmekapazitätsströme $\mu_{ist}$, das auf den Sollwert $\mu_{soll} = 1$ geregelt werden soll. Alternativ kann auch die Differenz von primärseitigem Massestrom $\dot{m}_P$ und dem sekundärseitigen Massestrom $\dot{m}_s$ als Regelgröße gebildet werden, die auf den Sollwert Null geregelt werden soll.

Durch Differenzbildung von Istwert und Sollwert der Regelgröße wird die Regeldifferenz e gebildet, die als Eingangsgröße für den Regelalgorithmus für die Regelung verwendet wird. Die Regelung kann als herkömmliche PI / PID-Regelung ausgebildet sein, ist aber nicht auf diese Standard-Regelalgorithmen beschränkt.

Die Ausgangsgröße des Reglers y dient als Stellgröße für die Pumpendrehzahl $n_{Pumpe}$. Die Ansteuerung der Pumpe kann z.B. über eine analoge 0-10V Schnittstelle erfolgen, aber auch digitale Schnittstellen sind möglich, sofern diese von der Primärkreispumpe 107 (in dem Beispiel eine Kesselkreispumpe) unterstützt werden. Auf eine detaillierte Beschreibung des Regelkreises wird verzichtet, da die PI / PID Regler und die Regelalgorithmen dem Fachmann bekannt sind. Dieser Regler 200 stellt eine einfache Möglichkeit zur Regelung dar.

In Fig. 6 ist ein alternativer Regler 201 in dessen schematischen Regelkreis dargestellt. Der Regler 201 umfasst eine Regelung 202 und eine Vorsteuerung 203.

Die Regelung 202 kann beispielhaft so ausgebildet sein, wie zuvor für den Regler 200 beschrieben, wobei als Regelgröße hier das Verhältnis der Wärmekapazitätsströme $\mu$ verwendet wird. Dies ist aber nicht notwendig; es kann auch jede andere geeignete Regelgröße im Rahmen der Erfindung verwendet werden, bspw. eine Differenz von Masseströmen oder Temperaturwerten.

Die Vorteuerung 203 ist der Regelung 202 vorgeschaltet. Die Kombination von Vorsteuerung 203 und Regelung 202 in dem Regler 201 wird auch als Systemregler bezeichnet. Der erfindungsgemäße Systemregler (Regler 201) beinhaltet zwei unabhängige Regelkonzepte, nämlich die Regung 202 und die Vorsteuerung 203, die parallel oder auch abwechselnd aktiv sein können. Die Vorteile des erfindungsgemäßen Systemreglers ergeben sich dadurch, dass die Vorsteuerung 203 die Führung des Regelkreises verbessert, ohne die Stabilität der Regelung 202 zu beeinflussen oder gar zu gefährden. Mögliche nachträgliche Optimierungen an der Regelung 202 können dabei stets ohne Anpassungen an der Vorsteuerung 203 durchgeführt werden. Mit anderen Worten wird die Vorsteuerung 203 der Primärkreispumpe 107 die Führung der Regelungsaufgabe verbessern. Da es sich bei der Vorsteuerung 203 um eine regelungstechnische Steuerung handelt, wird die Stabilität der Regelung 202 nicht beeinflusst. Die Regelung 202 muss also nur noch Unzulänglichkeiten der Vorsteuerung 203 kompensieren bzw. nachkorrigieren.

Nachstehend wird der Ablauf des Regelns durch den Regler 201 (Systemregler) beispielhaft erläutert, wobei erfindungsgemäß auch Variationen des Ablaufs, insbesondere im Hinblick auf die erfassten Systemgrößen (insbesondere Temperatur und Masseströme) und die verwendeten Regel- und Führungsgrößen möglich sind.

Für eine möglichst gute Wahl des Erwartungswertes der Stellgröße y werden folgende Schritte durchgeführt:

- Messung des primärseitigen Ist-Massenstroms $\dot{m}_{p,ist}$
- Messung der Vorlauf- und Rücklauftemperatur auf der Primärseite und der Sekundärseite zur Berechnung der Temperaturdifferenzen des Primärkreises $\Delta T_p$ und des Sekundärkreises $\Delta T_s$ und Berechnung der Temperaturdifferenzen des Primärkreises $\Delta T_p$ und des Sekundärkreises $\Delta T_s$

    oder

    Messung des sekundärseitigen Ist-Massenstroms $\dot{m}_{p,ist}$
- Berechnung des aktuellen Verhältnisses der Wärmekapazitätsströme $\mu_{ist}$ aus den Messwerten

$$\dot{m}_{p,soll} = \frac{\dot{m}_{p,ist}}{\mu_{ist}}$$

- Berechnung des primärseitigen Soll-Massenstroms
- Überführung des primärseitigen Soll-Massenstroms in die Stellgröße $n_{Pumpe}$

Für die Überführung des primärseitigen Soll-Massenstroms $\dot{m}_{p,soll}$ in die Stellgroße $n_{Pumpe}$ ist die Kenntnis des Pumpenkennfelds sowie der Anlagenkennlinie des Primärkreises notwendig.

Das Pumpenkennfeld (Kesselkreispumpe 107) wird vom Hersteller in einem Datenblatt der Pumpe angegeben und ist abhängig vom Pumpentyp. Das jeweilige Pumpenkennfeld kann als drei-dimensionales Kennfeld mit den Parametern (Förderhöhe vs. Massenstrom vs. Drehzahl) als Tabelle im Speicher des Reglers abgelegt werden. Es ist auch möglich das Pumpenkennfeld für verschiedene Drehzahlen ohne Dimensionen darzustellen (Druckverlustbeiwert $\zeta$ vs. Reynolds-Zahl $Re$) und alternativ auch als Tabelle im Speicher des Reglers abgelegt werden.

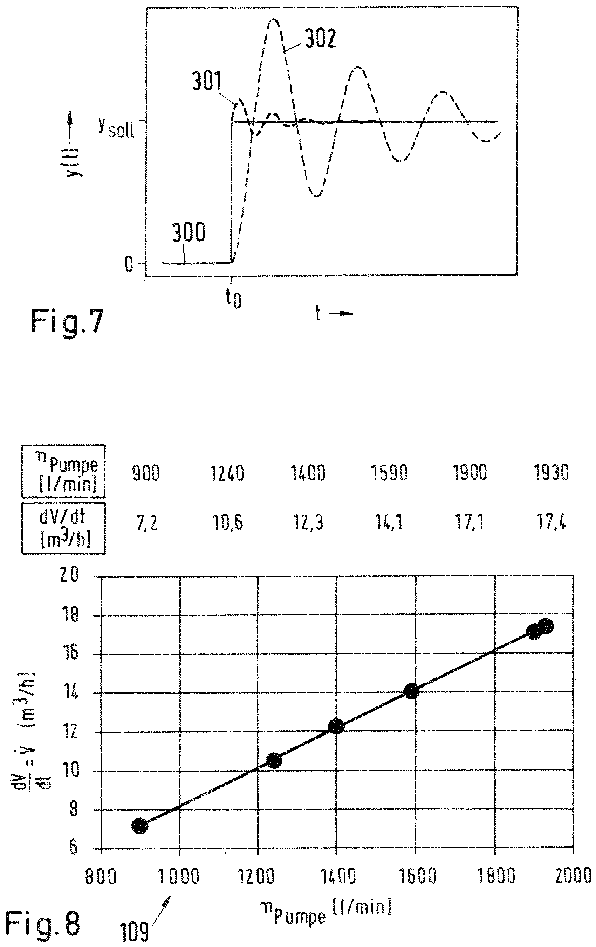

Die Anlagenkennlinie kann durch Einstellen einer Pumpendrehzahl und Messung des sich einstellenden primärseitigen Massenstroms automatisiert ermittelt werden. In der Praxis wird die Pumpendrehzahl über die Pumpeneingangsspannung (0-10 V) eingestellt. Abhängig von der Pumpendrehzahl ergibt sich ein Massenstrom $\dot{m}_p$. Dazu werden durch den Systemregler mehrere zumindest zwei Pumpendrehzahlen eingestellt und der jeweils sich ergebenden Massenstrom $\dot{m}_p$ wird gemessen und der zuvor eingestellten Pumpendrehzahl zugeordnet und als Wertepaar (Massenstrom, Pumpendrehzahl) oder (Massenstrom, Pumpeneingangsspannung) insbesondere in einer Tabelle im Systemregler abgelegt. Eine mögliche Diagrammdarstellung hierzu findet sich in Fig. 8.

Vorzugsweise werden zur Ermittlung der Anlagenkennlinie zumindest die folgenden vier Pumpeneingangsspannungen an der Pumpe eingestellt: Umin; 0,5*Umax; 0,7*Umax; 0,9*Umax. und der sich ergebende Massenstrom $\dot{m}_p$ wird vorzugsweise mit einem Wärmezähler 110 gemessen.

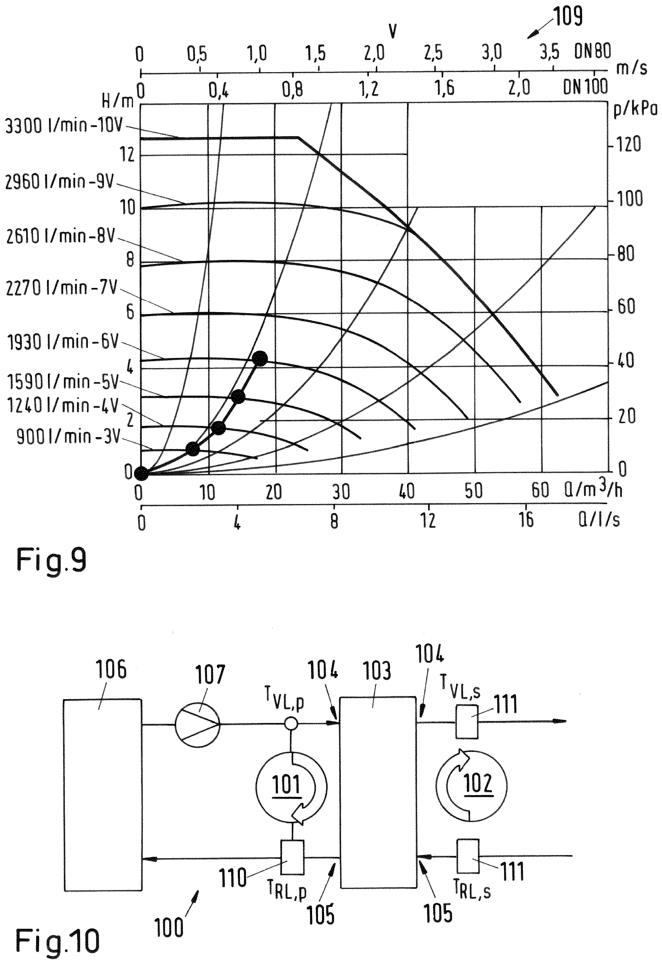

Mit der bekannten Pumpenkennlinie (aus der technischen Dokumentation des Pumpenherstellers) und der erfindungsgemäß ermittelte Anlagenkennlinie kann der für das erfinderische Verfahren erforderliche Soll-Massen- oder Volumenstrom über die entsprechende Pumpeneingangsspannung derart eingestellt werden, dass die hydraulische Weiche 103 in der Betriebsart "Normalbetrieb" betrieben wird. Die Anlagenkennlinie wird hierfür in das Pumpenkennlinienfeld eingetragen, wie beispielhaft in Fig. 9 gezeigt.

Ein vorbeschriebener Systemregler kann für den Fall besonders vorteilhaft sein, in dem der primärseitige Massenstrom $\dot{m}_p$ messtechnisch erfasst, der sekundärseitige Massenstrom $\dot{m}_s$ jedoch nicht gemessen werden kann und sich die Regelgröße aus dem Verhältnis der mit Temperaturfühlern gemessenen Temperaturdifferenzen des Primärkreises $\Delta T_p$ und des Sekundärkreises $\Delta T_s$ ergibt. Eine derartige Heizungsanlage ist in Fig. 10 gezeigt. Dort ist im Sekundärkreis 102 kein Wärmezähler 110 vorgesehen. Stattdessen werden mittels Temperatursensoren 111 im Vorlauf und im Rücklauf des Sekundärkreises 102 nur die sekundärseitige Vorlauftemperatur $T_{VL,s}$ und die sekundärseitige Rücklauftemperatur $T_{RL,s}$ gemessen, aus denen die Temperaturdifferenz des Sekundärkreises $\Delta T_s$ bestimmt wird. Aus dem Quotienten von (mittels des Wärmezählers 110 im Primärkreis erfassen primärseitigen Vorlauftemperatur $T_{VL,p}$ und primärseitige Rücklauftemperatur $T_{RL,p}$ kann dann als Regelgröße das Verhältnis der Wärmekapazitätsströme $\mu$ aus den gemessenen Temperaturdifferenzen des Primärkreises $\Delta T_p$ und des Sekundärkreises $\Delta T_s$ bestimmt werden. Dieser Messaufbau führt aufgrund von temperaturmesstechnischen Eigenschaften der Temperatursensoren 111 sowie der thermischen Trägheit des Systems allerdings zu einer schwer einzuregelnden Regelstrecke, die besondere Herausforderungen an das Regelungskonzept und den Regler 201 stellt. Hier ist der Vorteil des Systemreglers mit einer Vorsteuerung 203 und einer nachgeschalteten Regelung besonders vorteilhaft.

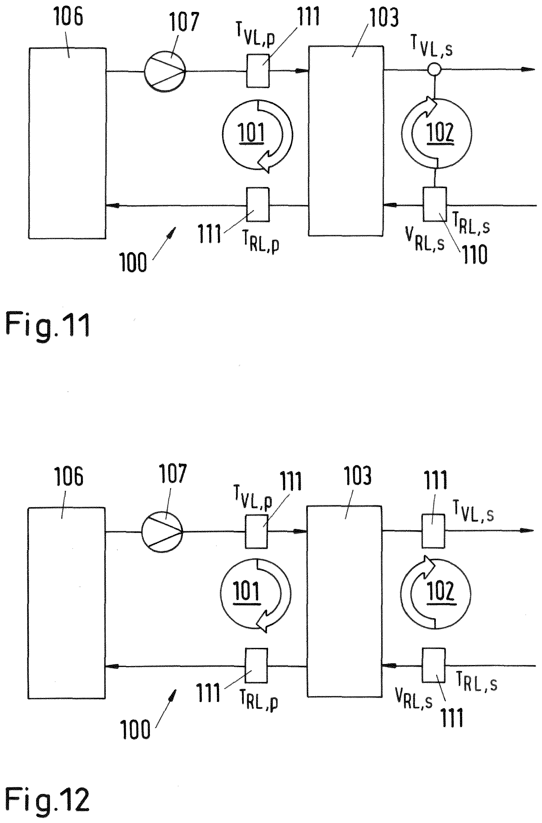

Weil die Heizungsanlage 100 grundsätzlich gleich aufgebaut ist, werden dieselben Bezugzeichen verwendet. Dies gilt auch die die nachfolgend in den Fig. 11 bis 14 gezeigten Heizungsanlagen 100.

Der Vorteil liegt demnach - grundsätzlich bei jeder Art der Messwerterfassung - in der Kombination von der Schnelligkeit der Vorsteuerung 203 mit der Robustheit der Regelung 202. Dabei wirkt die Vorsteuerung 203 direkt auf

die Messgröße $\mu_{ist}$, wohingegen die Regelung 202 die verbleibenden Unsicherheiten und Nichtlinearitäten innerhalb der Regelstrecke und nicht bekannte Störgrößen ausregelt. Ein weiterer Vorteil besteht darin, dass die Vorsteuerung 203 nicht von der Ausführung der Regelung abhängt. Folglich kann der Regler nachträglich durch Modifikation optimiert werden, ohne dass die Vorsteuerung 203 geändert werden muss. Der Einfluss der Vorsteuerung 203 auf das Regelverhalten des Regler 201 ist schematisch in Fig. 7 dargestellt. Hier zeigen die die durchgehende Linie 300 die Vorgabe der Stellgröße y aufgrund der Vorsteuerung 203 in Abhängigkeit und die Linie 301 das Regelverhalten der der Vorsteuerung 203 nachgeschalteten Regelung 202.

Die Linie 302 zeigt das Regelverhalten eines Reglers 200 ohne Vorsteuerung. Hier sind die Schwankungen um den Sollwert wesentlich größer und das Einstellen des Sollwerts dauert deutlich länger.

Fig. 11 zeigt schematisch die Heizungsanlage 100, bei der die Temperaturerfassung durch Temperatursensoren 111 im Primärkreis 101 erfolgt und der Wärmezähler 110 im Sekundärkreis 102 installiert ist. Auch bei dieser Ausführung kann der Wärmezähler 110, wie jeder Wärmezähler 110 entweder im Vorlauf oder im Rücklauf des jeweiligen Kreises, hier des Sekundärkreises 102, installiert sein, weil der Massestrom $\dot{m}$ im gesamten Kreis gleich ist. Der Wärmezähler 110 misst auch die Temperaturen im Vor- und im Rücklauf $T_{VL,s}$, $T_{RL,s}$ des Sekundärkreises 102. Das Verhältnis der Wärmekapazitätsströme $\mu$ wird basierend auf dem Verhältnis der beiden Temperaturdifferenzen $\Delta T_p$ zu $\Delta T_s$ gebildet.

In Fig. 12 ist eine Ausführungsform dargestellt, bei der kein Wärmezähler installiert ist. Die Berechnung des Verhältnisses der Wärmekapazitätsströme $\mu$ erfolgt durch Messung der Temperaturen im Vor- und Rücklauf des Primär- und des Sekundärkreises $T_{VL,p}$, $T_{RL,p}$, $TV_{L,s}$, $T_{RL,s}$. Das Verhältnis der Wärmekapazitätsströme $\mu$ wird basierend auf dem Verhältnis der beiden Temperaturdifferenzen $\Delta T_p$ zu $\Delta T_s$ gebildet.

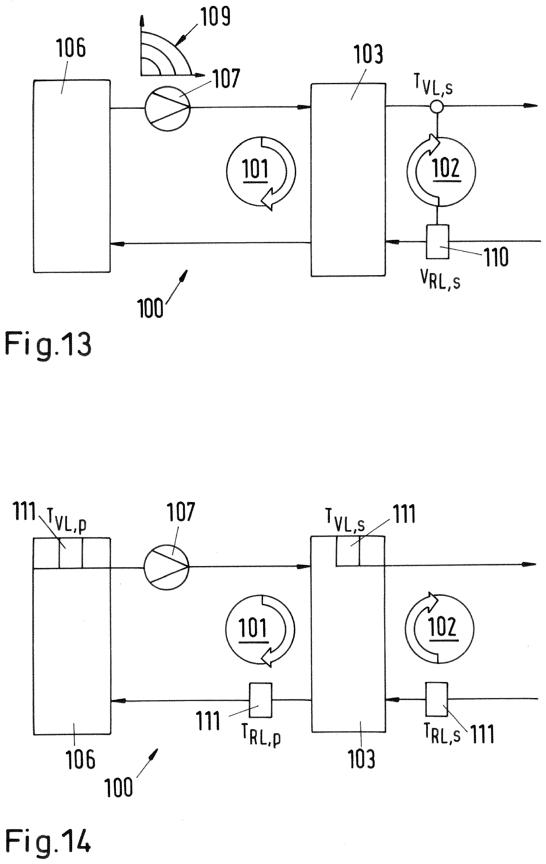

In Fig. 13 ist eine weitere Ausführung dargestellt. Der Wärmezähler 110 ist entweder im Vorlauf oder im Rücklauf des Sekundärkreises 102 installiert. Mit dem Wärmezähler wird der Massenstrom $\dot{m}_s$ im Sekundärkreis 102 gemessen. Der Massenstrom $\dot{m}_P$ im Primärkreis 101 wird anhand der Pumpen- und Anlagenkennlinie 109 und der aktuellen Ansteuerung der Pumpe (z.B. Pumpeneingangsspannung, Pumpendrehzahl, oder dgl.) ermittelt. Mit diesen kann das Verhältnis der Wärmekapazitätsströme $\mu$ ermittelt werden.

In Fig. 14 ist eine weitere anlagentechnische Ausführung des Heizkreises 100 zur Durchführung des erfindungsgemäßen Verfahrens dargestellt. Mit jeweils zwei Temperatursensoren 111, die jeweils im Rücklauf des Primärkreises 101 und Sekundärkreises 102 installiert sind, werden die Temperaturwerte jeweiligen Rücklauftemperaturwerte $T_{RL,p}$, $T_{RL,s}$ gemessen. Vorzugsweise werden die Vorlauftemperaturen durch bereits in dem Wärmeerzeuger 106 (bspw. durch Vorlauftemperaturfühler 111 am Kesselausgang) und einen in der hydraulischen Weiche 103 integriertem Temperatursensor 111 gemessen.

Das erfindungsgemäße Verfahren kann auch umgesetzt werden, wenn einzelne Temperaturen nicht messtechnisch erfasst werden können. Solche Temperaturen können modellbasiert errechnet werden. Dies kann entweder auf Basis physikalischer Modelle, mathematischer Modelle, datengetriebener Modelle, neuronaler Netze oder anderer rechnergestützter Verfahren erfolgen.

**Bezugszeichenliste:**

100    Heizungsanlage
101    Primärkreis
102    Sekundärkreis
103    Wärmeträgerreservoir, bspw. als hydraulische Weiche ausgebildet
104    Vorlaufanschluss
105    Rücklaufanschluss
106    Wärmeerzeuger, bspw. als Kessel oder Brennwertkessel ausgebildet
107    Primärkreispumpe, bspw. als Kesselkreispumpe ausgebildet
108    Wärmeverbraucher
109    Pumpen- und/oder Anlagenkennlinie
110    Wärmezähler
111    Temperaturzähler

200    Regler
201    als Systemregler ausgebildeter Regler
202    Regelung
203    als Vorsteuerung ausgebildete Steuerung

300    Regelverhalten der Vorsteuerung

301 Regelverhalten der Regelung mit Vorsteuerung
302 Regelverhalten der Regelung ohne Vorsteuerung

**Patentansprüche**

1. Verfahren zur Ansteuerung des Primärkreises einer Heizungsanlage (100) mit einem Primärkreis (101) und einem Sekundärkreis (102) für ein Wärmeträgermedium, wobei Primärkreis (101) und Sekundärkreis (102) über ein mit Wärmeträgermedium gefülltes Wärmeträgerreservoir (103) miteinander verbunden sind, so dass jeweils ein Vorlaufanschluss (104) und ein Rücklaufanschluss (105) des Primärkreises (101) und ein Vorlaufanschluss (104) und ein Rücklaufanschluss (105) des Sekundärkreises (102) in das Wärmeträgerreservoir (103) münden, wobei in dem Primärkreis (101) ein Wärmeerzeuger (106) zur Erwärmung des Wärmeträgermediums auf eine primärseitige Vorlauftemperatur sowie eine Primärkreispumpe (107) zum Erzeugen eines primärseitigen Massestroms des Wärmeträgermediums und in dem Sekundärkreis ein Wärmeverbraucher (108) angeordnet sind, wobei der primärseitige Massestrom derart eingestellt wird, dass in dem Wärmeträgerreservoir (103) keine Strömung von Wärmeträgermedium zwischen dem Vorlaufanschluss (104) und dem Rücklaufanschluss (105) des Primärkreises (101) und des Sekundärkreises (102) auftritt bzw. eine solche Strömung von Wärmeträgermedium in dem Wärmeträgerreservoir (103) minimiert wird, **dadurch gekennzeichnet, dass** zusätzlich zur Einstellung des primärseitigen Massestroms die primärseitige Vorlauftemperatur eingestellt wird.

2. Verfahren nach Anspruch 1, **dadurch gekennzeichnet, dass** als Paar von primärseitigen und sekundärseitigen Systemgrößen mindestens eines der nachfolgenden Wertepaare erfasst werden:

   (a) Temperaturdifferenz einer Vorlauftemperatur im Vorlaufanschluss (104) und einer Rücklauftemperatur im Rücklaufanschluss (105) jeweils für den Primärkreis (101) und den Sekundärkreis (102);
   (b) Massestrom jeweils für den Primärkreis (101) und den Sekundärkreis (102).

3. Verfahren nach Anspruch 1 oder 2, **dadurch gekennzeichnet, dass** das Einstellen des primärseitigen Massestroms durch Ansteuerung der Primärkreispumpe (107) mittels eines Reglers (200, 101) erfolgt.

4. Verfahren nach Anspruch 2 und 3, **dadurch gekennzeichnet, dass** als eine Regelgröße das Verhältnis aus primärseitiger und sekundärseitiger Systemgröße gebildet wird und der Regler (200, 201) eine Regelung (202) anwendet, mit der die Regelgröße auf Eins geregelt wird.

5. Verfahren nach Anspruch 2 und 3 oder nach Anspruch 4, **dadurch gekennzeichnet, dass** als eine Regelgröße aus dem Paar von Systemgrößen jeweils die Differenz aus primärseitiger und sekundärseitiger Systemgröße gebildet wird und der Regler (200, 201) eine Regelung (202) anwendet, mit der die Regelgröße auf Null geregelt wird.

6. Verfahren nach einem der Ansprüche 3 bis 5, **dadurch gekennzeichnet, dass** der Regler (200, 201) eine Steuerung (203) anwendet, um die Primärkreispumpe anzusteuern.

7. Verfahren nach Anspruch 6, **dadurch gekennzeichnet, dass** bei der Steuerung (203) ein Sollmassestrom für den primärseitigen Massestrom ermittelt und die Primärkreispumpe (107) zur Einstellung dieses primärseitigen Massestroms angesteuert wird.

8. Verfahren nach einem der Ansprüche 3 bis 7, **dadurch gekennzeichnet, dass** der Regler (200, 201) bei Ausführen der Regelung (202) und/oder Steuerung (203) als Stellgröße für die Ansteuerung der Primärkreispumpe zum Einstellen des primärseitigen Massestroms eine Pumpendrehzahl ermittelt.

9. Heizungsanlage (100) mit einem Primärkreis (101) und einem Sekundärkreis (102) für ein Wärmeträgermedium, wobei Primärkreis (101) und Sekundärkreis (102) über ein mit Wärmeträgermedium gefülltes Wärmeträgerreservoir (103) miteinander verbunden sind, so dass jeweils ein Vorlaufanschluss (104) und ein Rücklaufanschluss (105) des Primärkreises (101) und ein Vorlaufanschluss (104) und ein Rücklaufanschluss (105) des Sekundärkreises (102) in das Wärmeträgerreservoir (103) münden, wobei in dem Primärkreis (101) ein Wärmeerzeuger (106) zur Erwärmung des Wärmeträgermediums auf eine primärseitige Vorlauftemperatur sowie eine Primärkreispumpe (107) zum Erzeugen eines primärseitigen Massestroms des Wärmeträgermediums und in dem Sekundärkreis (102) ein Wärmeverbraucher (108) angeordnet sind, wobei die Heizungsanlage eine Vorrichtung zur Ansteuerung des Primärkreises aufweist, und die Vorrichtung eine Steuerschnittstelle zu einer Steuereinrichtung zum Einstellen des primären Massestroms im Primärkreis (101) und eine Regeleinrichtung aufweist, **dadurch gekennzeichnet, dass** die Regeleinrichtung einen Regler (200, 201) aufweist, der zur Durchführung des Verfahrens nach einem der vorhergehenden Ansprüche eingerichtet ist.

10. Vorrichtung nach Anspruch 9, **dadurch gekennzeichnet, dass** die Regeleinrichtung eine Schnittstelle zu Erfassungsgeräten von Systemgrößen der Heizungsanlage (100) aufweist.

11. Vorrichtung nach einem der Ansprüche 9 oder 10, **dadurch gekennzeichnet, dass** die Steuereinrichtung und/oder die Regeleinrichtung in einem separaten Gerät in der Heizungsanlage (100) angeordnet ist.

12. Vorrichtung nach Anspruch 9 oder 10, **dadurch gekennzeichnet, dass** die Steuereinrichtung und/oder die Regeleinrichtung in einem separaten Gerät entfernt von der Heizungsanlage (100) angeordnet ist und die Steuerschnittstelle und/oder die Schnittstelle der Regeleinrichtung eine Fernkommunikationseinheit umfassen oder die Steuerschnittstelle und/oder die Schnittstelle der Regeleinrichtung als Fernsteuerschnittstelle ausgebildet ist oder dass die ist Steuereinrichtung und/oder die Regeleinrichtung eine zusätzliche Fernkommunikationseinheit beinhaltet.

## Claims

1. Method for controlling the primary circuit of a heating system (100) with a primary circuit (101) and a secondary circuit (102) for a heat transfer medium, wherein the primary circuit (101) and the secondary circuit (102) are connected to one another via a heat transfer medium reservoir (103) filled with heat transfer medium, so that a flow connection (104) and a return connection (105) of the primary circuit (101) and a flow connection (104) and a return connection (105) of the secondary circuit (102) open into the heat transfer medium reservoir (103), wherein a heat generator (106) for heating the heat transfer medium to a primary-side flow temperature and a primary circuit pump (107) for generating a primary-side mass flow of the heat transfer medium are arranged in the primary circuit (101) and a heat consumer (108) is arranged in the secondary circuit, wherein the primary-side mass flow is set such that no flow of heat transfer medium occurs in the heat transfer reservoir (103) between the flow connection (104) and the return connection (105) of the primary circuit (101) and the secondary circuit (102) or such a flow of heat transfer medium in the heat transfer reservoir (103) is minimized, **characterized in that** in addition to setting the primary-side mass flow, the primary-side flow temperature is set .

2. Method according to claim 1, **characterized in that** at least one of the following value pairs is recorded as a pair of primary-side and secondary-side system variables:

   (a) temperature difference between a flow temperature in the flow connection (104) and a return temperature in the return connection (105) for the primary circuit (101) and the secondary circuit (102), respectively;
   (b) mass flow for the primary circuit (101) and the secondary circuit (102) respectively.

3. Method according to claim 1 or 2, **characterized in that** the adjustment of the primary-side mass flow is carried out by controlling the primary circuit pump (107) by means of a controller (200, 101).

4. Method according to claim 2 and 3, **characterized in that** the ratio of the primary-side and secondary-side system variables is formed as a controlled variable and the controller (200, 201) applies a regulation (202) with which the controlled variable is controlled to one.

5. Method according to claim 2 and 3 or according to claim 4, **characterized in that** the difference between the primary-side and secondary-side system variables is formed as a controlled variable from the pair of system variables and the controller (200, 201) applies a regulation (202) with which the controlled variable is controlled to zero .

6. Method according to one of claims 3 to 5, **characterized in that** the controller (200, 201) uses a control (203) to control the primary circuit pump.

7. Method according to claim 6, **characterized in that** in the control (203) a target mass flow for the primary-side mass flow is determined and the primary circuit pump (107) is controlled to adjust this primary-side mass flow.

8. Method according to one of claims 3 to 7, **characterized in that** the controller (200, 201) determines a pump speed as a manipulated variable for controlling the primary circuit pump for adjusting the primary-side mass flow when executing the regulation (202) and/or control (203) .

9. Heating system (100) with a primary circuit (101) and a secondary circuit (102) for a heat transfer medium, wherein the primary circuit (101) and the secondary circuit (102) are connected to one another via a heat transfer medium reservoir (103) filled with heat transfer medium, so that a flow connection (104) and a return connection (105) of the primary circuit (101) and a flow connection (104) and a return connection (105) of the secondary circuit (102) each open into the heat transfer medium reservoir (103), wherein a heat generator (106) for heating the heat transfer medium to a primary-side flow temperature and a primary circuit pump (107) for generating a primary-side mass flow of the heat transfer medium are arranged in the primary circuit (101) and a heat consumer (108) is arranged in the secondary circuit (102), wherein the heating system has a device for controlling the primary circuit, and the device has a control interface to a control device for adjusting the primary mass flow in the primary circuit (101) and a control device, **characterized in that** the control device has a controller (200, 201) which is set up to carry out the method according to one of the preceding claims.

10. Device according to claim 9, **characterized in that** the control device has an interface to recording devices for system variables of the heating system (100).

11. Device according to one of claims 9 or 10, **characterized in that** the control device and/or the regulating device is arranged in a separate device in the heating system (100).

12. Device according to claim 9 or 10, **characterized in that** the control device and/or the regulating device is arranged in a separate device remote from the heating system (100) and the control interface and/or the interface of the regulating device comprise a remote communication unit or the control interface and/or the interface of the regulating device is designed as a remote control interface or that the control device and/or the regulating device contains an additional remote communication unit.

**Revendications**

1. Procédé de régulation du circuit primaire d'un système de chauffage (100) comprenant un circuit primaire (101) et un circuit secondaire (102) pour un fluide caloporteur, le circuit primaire (101) et le circuit secondaire (102) étant reliés l'un à l'autre par l'intermédiaire d'un réservoir de fluide caloporteur (103) rempli de fluide caloporteur, de sorte qu'un raccord d'aller (104) et un raccord de retour (105) du circuit primaire (101) ainsi qu'un raccord d'aller (104) et un raccord de retour (105) du circuit secondaire (102) débouchent dans le réservoir de fluide caloporteur (103), un générateur de chaleur (106) pour chauffer le fluide caloporteur à une température d'aller côté primaire et une pompe de circuit primaire (107) pour générer un flux massique côté primaire du fluide caloporteur étant disposés dans le circuit primaire (101) et un consommateur de chaleur (108) étant disposé dans le circuit secondaire, le flux massique côté primaire étant réglé de telle sorte qu'aucun flux de fluide caloporteur ne se produise dans le circuit de transfert de chaleur réservoir (103) entre le raccord d'écoulement (104) et le raccord de retour (105) du circuit primaire (101) et du circuit secondaire (102) ou un tel écoulement de fluide caloporteur dans le réservoir de transfert de chaleur (103) est minimisé, **caractérisé en ce qu'**en plus du réglage du débit massique côté primaire, la température d'écoulement côté primaire est réglée .

2. Procédé selon la revendication 1, **caractérisé en ce qu'**au moins l'une des paires de valeurs suivantes est enregistrée comme paire de variables système côté primaire et côté secondaire :

   (a) différence de température entre une température de départ dans le raccord de départ (104) et une température de retour dans le raccord de retour (105) pour le circuit primaire (101) et le circuit secondaire (102), respectivement ;
   (b) débit massique pour le circuit primaire (101) et le circuit secondaire (102) respectivement.

3. Procédé selon la revendication 1 ou 2, **caractérisé en ce que** le réglage du débit massique côté primaire est effectué en commandant la pompe du circuit primaire (107) au moyen d'un contrôleur (200, 101).

4. Procédé selon la revendication 2 et 3, **caractérisé en ce que** le rapport des variables système côté primaire et côté secondaire est formé comme une grandeur commandée et le contrôleur (200, 201) applique une régulation (202) avec laquelle la grandeur commandée est commandée à un.

**5.** Procédé selon la revendication 2 et 3 ou selon la revendication 4, **caractérisé en ce que** la différence entre les variables système côté primaire et côté secondaire est formée comme variable commandée à partir de la paire de variables système et le contrôleur (200, 201) applique une régulation (202) avec laquelle la variable commandée est ramenée à zéro.

**6.** Procédé selon l'une des revendications 3 à 5, **caractérisé en ce que** le contrôleur (200, 201) utilise une commande (203) pour commander la pompe du circuit primaire.

**7.** Procédé selon la revendication 6, **caractérisé en ce que** dans la commande (203) un débit massique cible pour le débit massique côté primaire est déterminé et la pompe du circuit primaire (107) est commandée pour ajuster ce débit massique côté primaire.

**8.** Procédé selon l'une des revendications 3 à 7, **caractérisé en ce que** le contrôleur (200, 201) détermine une vitesse de pompe en tant que grandeur de réglage pour commander la pompe du circuit primaire pour ajuster le débit massique côté primaire lors de l'exécution de la régulation (202) et/ou du contrôle (203 ).

**9.** Système de chauffage (100) comprenant un circuit primaire (101) et un circuit secondaire (102) pour un fluide caloporteur, le circuit primaire (101) et le circuit secondaire (102) étant reliés l'un à l'autre par l'intermédiaire d'un réservoir de fluide caloporteur (103) rempli de fluide caloporteur, de sorte qu'un raccord d'écoulement (104) et un raccord de retour (105) du circuit primaire (101) ainsi qu'un raccord d'écoulement (104) et un raccord de retour (105) du circuit secondaire (102) débouchent chacun dans le réservoir de fluide caloporteur (103), un générateur de chaleur (106) pour chauffer le fluide caloporteur à une température d'écoulement côté primaire et une pompe de circuit primaire (107) pour générer un flux massique côté primaire du fluide caloporteur étant disposés dans le circuit primaire (101) et un consommateur de chaleur (108) étant disposé dans le circuit secondaire (102), le système de chauffage comportant un dispositif de commande du circuit primaire et le dispositif comportant une interface de commande vers un dispositif de commande pour réglage du débit massique primaire dans le circuit primaire (101) et un dispositif de commande, **caractérisé en ce que** le dispositif de commande comporte un contrôleur (200, 201) qui est conçu pour mettre en oeuvre le procédé selon l'une des revendications précédentes.

**10.** Dispositif selon la revendication 9, **caractérisé en ce que** le dispositif de commande présente une interface vers des dispositifs d'enregistrement de variables système du système de chauffage (100).

**11.** Dispositif selon l'une des revendications 9 ou 10, **caractérisé en ce que** le dispositif de commande et/ou le dispositif de régulation est disposé dans un dispositif séparé dans le système de chauffage (100).

**12.** Dispositif selon la revendication 9 ou 10, **caractérisé en ce que** le dispositif de commande et/ou le dispositif de régulation est disposé dans un dispositif séparé, distant du système de chauffage (100), et l'interface de commande et/ou l'interface du dispositif de régulation comprend une unité de communication à distance ou l'interface de commande et/ou l'interface du dispositif de régulation est conçue comme une interface de commande à distance ou **en ce que** le dispositif de commande et/ou le dispositif de régulation contient une unité de communication à distance supplémentaire.

Fig.1

$$V_{VL,p} = V_{VL,s} = V_{RL,p} = V_{RL,s}$$
$$T_{VL,p} = T_{VL,s}$$
$$T_{RL,p} = T_{RL,s}$$

Fig.2

$$V_{VL,p} > V_{VL,s} \text{ und } V_{RL,p} > V_{RL,s}$$
$$T_{VL,p} = T_{VL,s}$$
$$T_{RL,p} > T_{RL,s}$$

$V_{VL,p} < V_{VL,s}$ und $V_{RL,p} < V_{RL,s}$
$T_{VL,p} > T_{VL,s}$
$T_{RL,p} = T_{RL,s}$

Fig.3

Fig.4

Fig.5

Fig.6

Fig.7

| $\eta_{Pumpe}$ [l/min] | 900 | 1240 | 1400 | 1590 | 1900 | 1930 |
|---|---|---|---|---|---|---|
| dV/dt [m³/h] | 7,2 | 10,6 | 12,3 | 14,1 | 17,1 | 17,4 |

Fig.8    109

Fig.9

Fig.10

Fig.11

Fig.12

Fig.13

Fig.14

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- FR 2634873 A1
- DE 20109236 U1
- DE 102015014378 A1